# EUROPÄISCHE PATENTANMELDUNG

(11) **EP 0 864 614 A1**
(43) Veröffentlichungstag der Anmeldung: **16.09.1998**
(21) Anmeldenummer: 98810184.6
(22) Anmeldetag: 04.03.1998
(51) Int. Cl.: C09B 35/56, C09B 67/22

(54) **Azofarbstoffmischungen, Azofarbstoffe, Verfahren zu deren Herstellung und deren Verwendung**

(30) Priorität: 13.03.1997 CH 608/97
(71) Anmelder: Ciba Specialty Chemicals Holding Inc., 4057 Basel (CH)
(72) Erfinder: Lauk, Urs, 8047 Zürich (CH)

(57) **Zusammenfassung**

Farbstoffmischungen, dadurch gekennzeichnet, dass sie mindestens einen Farbstoff der Formel (1) 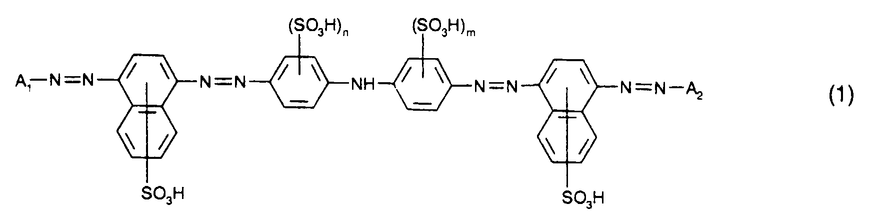 zusammen mit mindestens einem Farbstoff der Formeln (2) oder (3) 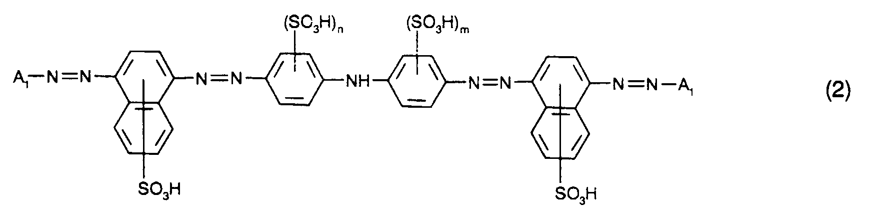 oder 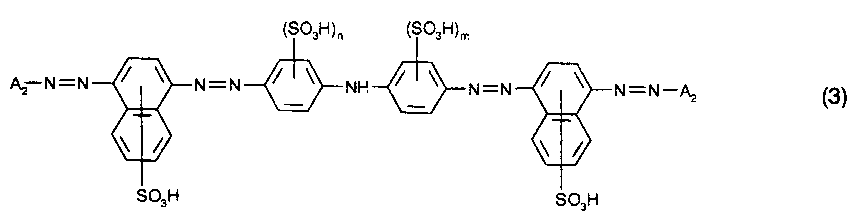 enthalten, worin die Substituenten die im Anspruch 1 angegebene Bedeutung haben, sind Direktfarbstoffe für insbesondere cellulosische Fasermaterialien. Sie sind hochtemperaturstabil und eignen sich besonders gut zum einbadigen, einstufigen Färben von Polyester/Baumwoll-Mischgeweben mit einem Dispersionsfarbstoff für die Polyesterfasern unter den Färbebedingungen für Polyesterfasern.

## Beschreibung

Die vorliegende Erfindung betrifft neue Mischungen von Azofarbstoffen, neue Azofarbstoffe, Verfahren zu deren Herstellung sowie deren Verwendung zum Färben und Bedrucken von Fasermaterialien, insbesondere von textilen Fasermaterialien.

Die der vorliegenden Erfindung zugrundeliegende Aufgabe war es, Farbstoffmischungen sowie Farbstoffe zu finden, welche zum Färben von stickstoffhaltigen und hydroxygruppenhaltigen Fasermaterialien, insbesondere von cellulosischen Fasermaterialien, geeignet sind, gute Echtheitseigenschaften aufweisen und hochtemperaturstabil sind.

Es wurde nun gefunden, dass die nachstehenden Azofarbstoffmischungen und Azofarbstoffe diesen Anforderungen weitestgehend genügen.

Gegenstand der vorliegenden Erfindung sind somit Farbstoffmischungen, welche dadurch gekennzeichnet sind, dass sie mindestens einen Farbstoff der Formel (1) 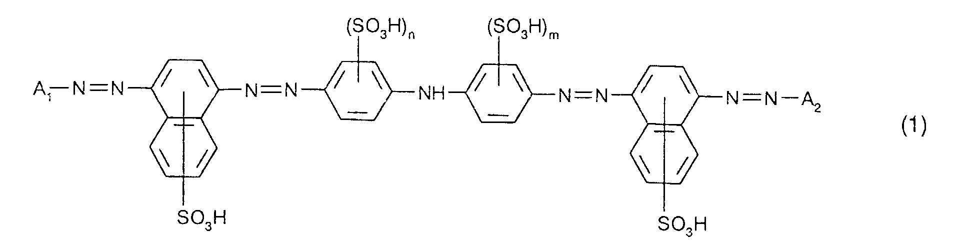 zusammen mit mindestens einem Farbstoff der Formeln (2) oder (3) 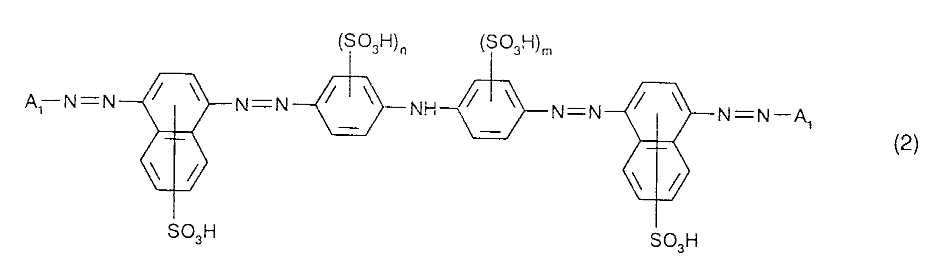 oder 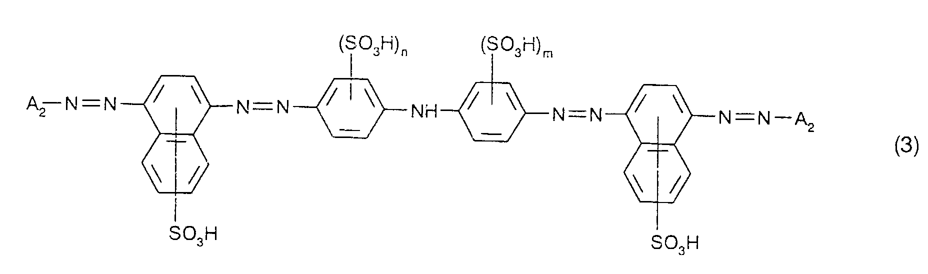 enthalten, worin
A₁ und A₂ unabhängig voneinander je den Rest einer Kupplungskomponente der Benzol- oder Naphthalinreihe oder der heterocyclischen Reihe bedeuten und
n und m die Zahlen 0 oder 1 sind.

Die den Verbindungen der Formeln (1), (2) und (3) zugrunde liegenden Kupplungskomponenten A₁-H und A₂-H sind an sich bekannt und in grosser Zahl beschrieben z.B. in Venkataraman "The Chemistry of Synthetic Dyes" Band 6, Seiten 213-297, Academic Press, New York, London 1972.

A₁ und A₂ stehen unabhängig voneinander je bevorzugt für den Rest einer Benzol-, Naphthalin-, Pyrazolon-, Aminopyrazol-, Pyridon-, Pyrimidin-, Indol-, Naphthylimidazol-, Diphenylamin-, Pyrazolo[2,3-a]pyrimidin- oder Tetrahydrochinolin-Kupplungskomponente, wobei die genannten Reste weitersubstituiert sein können.

A₁ und A₂ stehen unabhängig voneinander je besonders bevorzugt für einen Benzol-, Naphthalin-, 6-Hydroxypyrid-(2)-on-, 1 -Phenyl-5-aminopyrazol-, 1 -Phenylpyrazol-(5)-on- oder Indolrest. Ganz besonders bevorzugt sind A₁ und A₂ unabhängig voneinander je ein Benzol-, Napthalin-, 1-Phenylpyrazol-(5)-on- oder Indolrest, insbesondere ein Benzol-, Napthalin- oder Indolrest und vorzugsweise ein Napthalin- oder Indolrest. Von besonderem Interesse sind Naphthalinreste.

Als Beispiele für Substituenten am Rest A₁ oder A₂ seien die folgenden genannt: C₁-C₆-Alkyl, worunter generell Methyl, Aethyl, n- oder iso-Propyl, n-, iso-, sec.- oder tert.-Butyl oder geradkettiges oder verzweigtes Pentyl oder Hexyl zu verstehen ist; C₁-C₄-Alkoxy, worunter generell Methoxy, Aethoxy, n- oder iso-Propoxy oder n-, iso-, sec.- oder tert.- Butoxy zu verstehen ist; Hydroxy-C₁-C₄-Alkoxy; Phenoxy; gegebenenfalls z.B. durch Hydroxy oder Methoxy substituiertes C₂-C₈-Alkanoylamino, wie z.B. Acetylamino, Hydroxyacetylamino, Methoxyacetylamino oder Propionylamino; gegebenenfalls im Arylteil z.B. durch Hydroxy oder Methoxy substituiertes Benzoylamino oder Naphthoylamino; gegebenenfalls im Alkylteil z.B. durch Hydroxy, Methyl oder Methoxy substituiertes C₂-C₈-Alkoxycarbonylamino; gegebenenfalls im Phenyiteil z.B. durch Hydroxy, Methyl oder Methoxy substituiertes Phenoxycarbonylamino; Amino; gegebenenfalls im Alkylteil z.B. durch Hydroxy, C₁-C₄-Alkoxy, Carboxy, Cyano, Halogen, Sulfo, Sulfato, Phenyl oder Sulfophenyl substituiertes N-C₁-C₄-Alkyl- oder N,N-Di-C₁-C₄-Alkylamino, z.B. Methylamino, Aethylamino, N,N-Dimethylamino, N,N-Diethylamino, β-Cyanoethylamino, β-Hydroxyethylamino, N,N-Di-β-Hydroxyethylamino, β-Sulfoethylamino, y-Sulfo-n-propylamino, β-Sulfatoethylamino, N-Ethyl-N-(3-Sulfobenzyl)-amino, N-(β-Sulfoethyl)-N-benzylamino; Cyclohexylamino; gegebenenfalls im Phenylteil z.B. durch C₁-C₄-Alkyl, C₁-C₄-Alkoxy, Carboxy, Halogen oder Sulfo substituiertes N-Phenylamino oder N-C₁-C₄-Alkyl-N-phenylamino; C₂-C₄-Alkoxycarbonyl, z.B. Methoxy- oder Aethoxycarbonyl; Trifluoromethyl; Nitro; Cyano; Halogen, worunter generell z.B. Fluor, Brom oder insbesondere Chlor zu verstehen ist; Ureido; Hydroxy; Carboxy; Sulfo; Sulfomethyl; Carbamoyl; Sulfamoyl; gegebenenfalls im Phenylteil durch Sulfo oder Carboxy substituiertes N-Phenylsulfamoyl oder N-C₁-C₄-Alkyl-N-phenylsulfamoyl; Methyl- oder Aethylsulfonyl.

In einer besonderen Ausführungsform der vorliegenden Erfindung stehen A₁ und A₂ unabhängig voneinander je für einen Rest der Formeln (4), (5) oder (6) 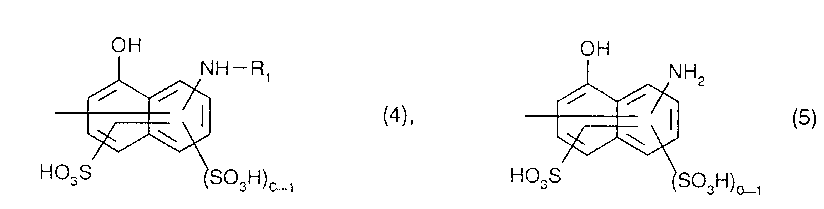 oder 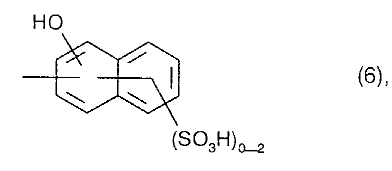 worin
R₁ gegebenenfalls substituiertes Phenyl oder Naphthyl oder ein Rest der Formel -CO-R ist, wobei R gegebenenfalls substituiertes C₁-C₆-Alkyl, C₁-C₆-Alkoxy, C₅-C₇-Cycloalkyl, Phenyl, Phenoxy oder Naphthyl bedeutet und
n und m die Zahl 0 oder 1 sind.

Als C₁-C₆-Alkyl kommt für R beispielsweise Methyl, Aethyl, Propyl, Isopropyl, Butyl, sek.-Butyl, tert.-Butyl, Isobutyl, Pentyl oder Hexyl, insbesondere C₁-C₄-Alkyl, vorzugsweise Methyl oder Aethyl und ganz besonders bevorzugt Methyl, in Betracht. Die genannten Alkylreste können unsubstituiert oder beispielsweise durch Hydroxy, C₁-C₄-Alkoxy, Carboxy, Cyano, Sulfo, Sulfato oder Halogen weitersubstituiert sein.

Die Bedeutung Sulfo umfasst generell die freie Säureform (-SO₃H) als auch die Salzform, wobei insbesondere Alkalimetallsalze (Li, Na, K) oder Ammoniumsalze in Frage kommen.

Als C₁-C₆-Alkoxy kommt für R beispielsweise Methoxy, Aethoxy, Propoxy, lsopropoxy, Butoxy, lsobutoxy, Pentyloxy oder Hexyloxy, insbesondere C₁-C₄-Alkoxy, vorzugsweise Methoxy, in Betracht. Die genannten Alkoxyreste können unsubstituiert oder beispielsweise durch Hydroxy, C₁-C₄-Alkoxy, Carboxy, Cyano, Sulfo, Sulfato oder Halogen weitersubstituiert sein.

Als C₅-C₇-Cycloalkyl kommt für R beispielsweise Cyclopentyl, Cyclohexyl oder Cycloheptyl in Betracht und insbesondere der Cyclohexylrest. Die genannten Cycloalkylreste können unsubstituiert oder beispielsweise durch C₁-C₄-Alkyl, C₁-C₄-Alkoxy, Carboxy oder Halogen, insbesondere Methyl, substituiert sein.

Als Phenyl, Phenoxy oder Naphthyl kommen für R, neben den entsprechenden unsubstituierten Resten, die beispielsweise durch C₁-C₄-Alkyl, C₁-C₄-Alkoxy, Ureido, Carboxy, C₂-C₄-Alkanoylamino, Sulfo oder Halogen substituierten Reste in Betracht.

R ist bevorzugt gegebenenfalls durch Hydroxy, C₁-C₄-Alkoxy, Sulfo, Sulfato oder Halogen substituiertes C₁-C₆-Alkyl oder C₁-C₆-Alkoxy; gegebenenfalls durch C₁-C₄-Alkyl oder Halogen substituiertes C₅-C₇-Cycloalkyl oder gegebenfalls durch C₁-C₄-Alkyl, C₁-C₄-Alkoxy, Sulfo oder Halogen substituiertes Phenyl, Phenoxy oder Naphthyl.

Besonders bevorzugt ist R gegebenenfalls durch Hydroxy, C₁-C₄-Alkoxy oder Halogen substituiertes C₁-C₆-Alkyl oder C₁-C₆-Alkoxy oder gegebenfalls durch C₁-C₄-Alkyl, C₁-C₄-Alkoxy, Sulfo oder Halogen substituiertes Phenyl oder Phenoxy.

Ganz besonders bevorzugt ist R C₁-C₄-Alkyl, insbesondere Methyl oder Aethyl, C₁-C₄-Alkoxy, insbesondere Methoxy oder Aethoxy, oder Phenyl.

Als Phenyl oder Naphthyl kommen für R₁, neben den entsprechenden unsubstituierten Resten, die beispielsweise durch C₁-C₄-Alkyl, C₁-C₄-Alkoxy, Ureido, Carboxy, Nitro, C₂-C₄-Alkanoylamino, Sulfo oder Halogen substituierten Reste in Betracht.

R₁ ist bevorzugt gegebenenfalls durch C₁-C₄-Alkyl, C₁-C₄-Alkoxy, C₂-C₄-Alkanoylamino, Nitro, Halogen, Carboxy oder Sulfo substituiertes Phenyl oder Naphthyl oder ein Rest der Formel -CO-R, wobei R gegebenenfalls durch Hydroxy, C₁-C₄-Alkoxy oder Halogen substituiertes C₁-C₆-Alkyl oder C₁-C₆-Alkoxy oder gegebenfalls durch C₁-C₄-Alkyl, C₁-C₄-Alkoxy, Sulfo oder Halogen substituiertes Phenyl oder Phenoxy ist.

Besonders bevorzugt ist R₁ gegebenenfalls durch C₁-C₄-Alkyl, C₁-C₄-Alkoxy, Halogen oder Sulfo substituiertes Phenyl, insbesondere Phenyl, oder ein Rest der Formel -CO-R, wobei R C₁-C₄-Alkyl, insbesondere Methyl oder Aethyl, C₁-C₄-Alkoxy, insbesondere Methoxy oder Aethoxy, oder Phenyl ist.

In einer ganz besonderen Ausführungsform der vorliegenden Erfindung stehen A₁ und A₂ unabhängig voneinander je für einen Rest der Formeln (4a), (5a), (6a) oder (6b) 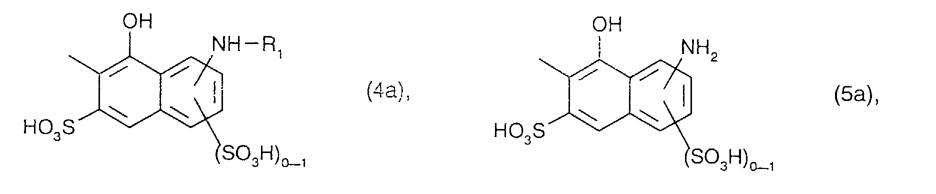 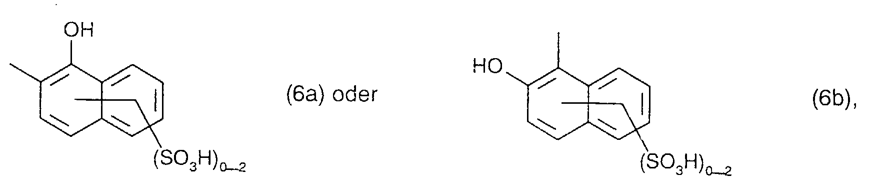 worin
für R₁ die oben angegebenen Bedeutungen und Bevorzugungen gelten.

Bevorzugt sind Farbstoffmischungen, welche dadurch gekennzeichnet sind, dass sie mindestens einen Farbstoff der Formel (1a) 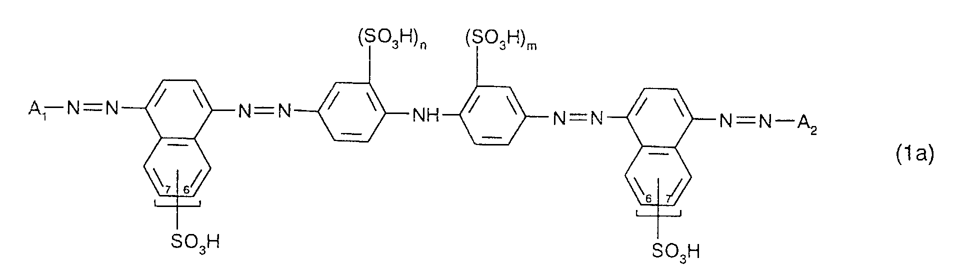 zusammen mit mindestens einem Farbstoff der Formeln (2a) oder (3a) 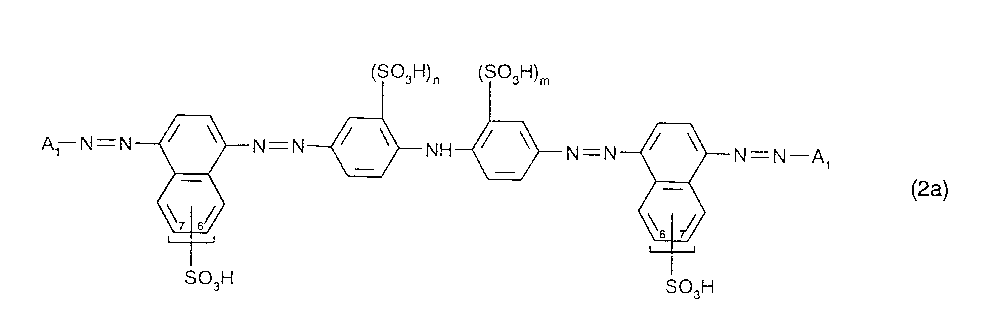 oder 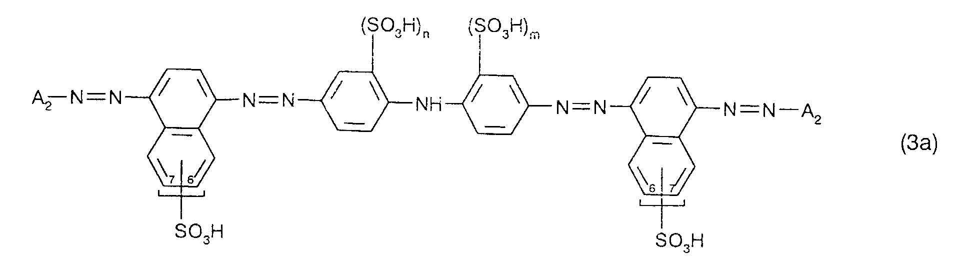 enthalten, worin
die Sulfogruppen der Naphthalinsulfonsäurekomponenten unabhängig voneinander je in 6-oder 7-Position gebunden sind,
A₁ und A₂ unabhängig voneinander je einen Rest der Formeln (4a), (5a), (6a) oder (6b), vorzugsweise je einen Rest der Formel (4a), (5a) oder (6b), bedeuten,
R₁ gegebenenfalls durch C₁-C₄-Alkyl, C₁-C₄-Alkoxy, Halogen oder Sulfo substituiertes Phenyl, vorzugsweise Phenyl, oder ein Rest der Formel -CO-R ist, wobei
R Methyl, Aethyl, Methoxy, Aethoxy oder Phenyl, vorzugsweise Methyl, Aethyl oder Pheny!, bedeutet und
die Summe von n und m die Zahl 0 oder 1 ist.

Besonders bevorzugt sind Farbstoffmischungen, welche dadurch gekennzeichnet sind, dass sie mindestens einen Farbstoff der Formel (1a) zusammen mit mindestens einem Farbstoff der Formel (2a) und mindestens einem Farbstoff der Formel (3a) enthalten.

In den erfindungsgemässen Farbstoffmischungen haben die Reste A₁ und A₂ unterschiedliche Bedeutungen.

Gegenstand der vorliegenden Erfindung ist ferner ein Verfahren zur Herstellung der erfindungsgemässen Farbstoffmischungen, welches dadurch gekennzeichnet ist, dass man eine Verbindung der Formel (7) 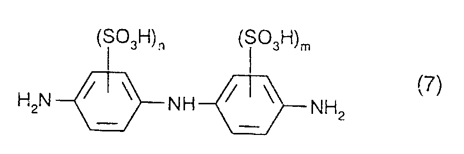 diazotiert, auf eine Verbindung der Formel (8) kuppelt 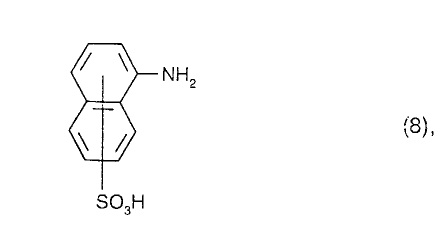 die resultierende Verbindung der Formel (9) 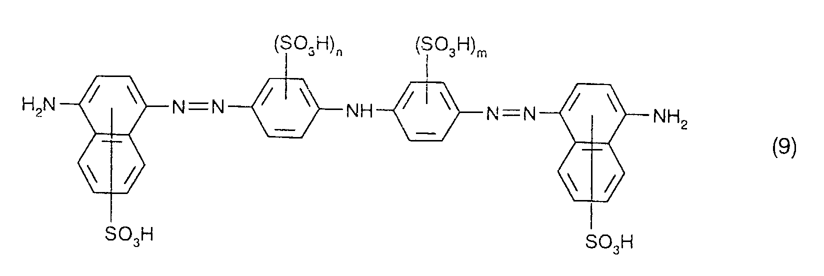 diazotiert und auf die Verbindungen der Formeln (10) und (11)

A₁-H (10)

und

A₂-H (11)

kuppelt, wobei A₁ und A₂, n und m jeweils die oben angegebenen Bedeutungen und Bevorzugungen haben.

Die Diazotierung der Verbindungen der Formeln (7) und (9) erfolgt in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 40°C und vorzugsweise bei -5 bis 10°C.

Die Kupplung auf die Kupplungskomponenten der Formeln (8), (10) und (11) erfolgt in an sich bekannter Weise, bei sauren, neutralen bis schwach alkalischen pH-Werten, z.B. einem pH-Wert von 5 bis 10, und Temperaturen von beispielsweise -5 bis 40°C, vorzugsweise 0 bis 30°C.

Die Verbindungen der Formeln (7), (8), (10) und (11) sind bekannt oder können in Analogie zu bekannten Verbindungen hergestellt werden.

Als bevorzugte Kupplungskomponenten der Formel (8) seien die 1-Aminonaphthalin-6-sulfonsäure, die 1-Aminonaphthalin-7-sulfonsäure, die Mischungen aus diesen Verbindungen oder das bei der Synthese dieser Verbindungen anfallende Isomerengemisch, bestehend aus der 1-Aminonaphthalin-6-sulfonsäure und der 1-Aminonaphthalin-7-sulfonsäure, genannt.

Eine besondere Ausführungsform des Verfahrens zur Herstellung der erfindungsgemässen Farbstoffmischungen ist dadurch gekennzeichnet, dass man eine Verbindung der Formel (7) diazotiert und nacheinander, oder in beliebiger Reihenfolge, auf Verbindungen der Formeln (8a) und (8b) 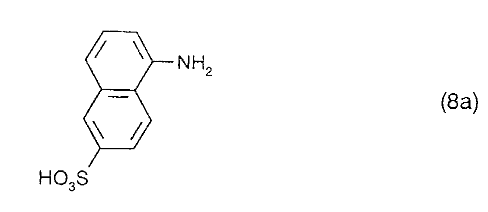 und 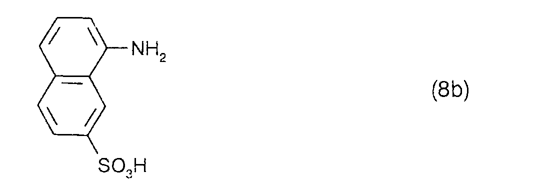 kuppelt, wobei die bezüglich der Stellung der Sulfogruppe der Aminonaphthalinsulfonsäurekomponenten unsymmetrische Verbindung der Formel (9a) 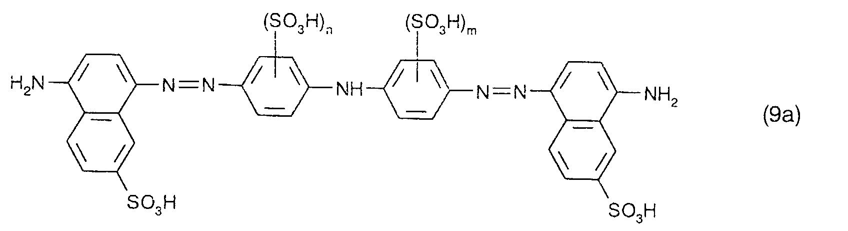 erhalten wird.

Die Verbindung der Formel (9a) wird anschliessend diazotiert und auf die Verbindungen der Formeln (10) und (11) gekuppelt.

Verbindungen der Formeln (10) oder (11), worin A₁ und A₂ einen Rest der Formel (4) 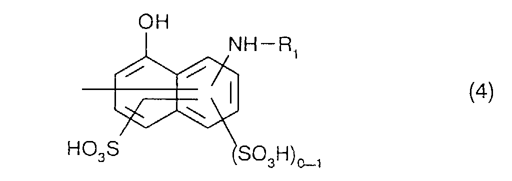 bedeuten, mit R₁ in der Bedeutung eines Restes der Formel -CO-R, können beispielsweise erhalten werden, indem man eine Verbindung der Formel (5) 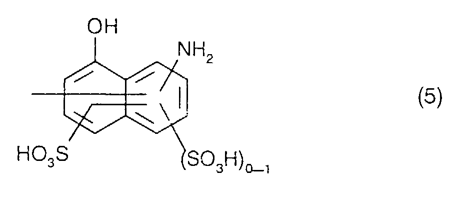 mit einer den Rest R₁ einführenden Verbindung, beispielsweise die Verbindung der Formel (13a)

Hal-R₁ (13a),

umsetzt, worin Hal Halogen, wie Chlor, Brom oder Jod und insbesondere Chlor bedeutet.

Als Beispiele für Verbindungen der Formel (13a) seien Acetylchlorid, Propionylchlorid, Methoxyacetylchlorid, Benzoylchlorid, Chlorameisensäureaethylester sowie Chlorameisensäurephenylester genannt.

Als weitere Beispiele für den Rest R₁ einführende Verbindungen, wobei R₁ einen Rest der Formel -CO-R bedeutet, seien Essigsäureanhydrid und Propionsäureanhydrid genannt.

Die Einführung des Restes R₁ kann z.B. in dipolaren aprotischen Lösungsmitteln, wie z.B. Dimethylformamid oder Dimethylsulfoxid, oder in Pyridin oder vorzugsweise in Wasser erfolgen, bei einer Temperatur von beispielsweise 10 bis 80°C, insbesondere 10 bis 50°C.

Die Umsetzung mit Essigsäureanhydrid erfolgt in der Regel in wässrigem Medium, in Gegenwart einer Base, wie beispielsweise einem Alkalicarbonat oder Alkalihydroxid, z.B. Natriumcarbonat, Kaliumcarbonat oder Natriumhydroxid, bei einer Temperatur von z.B. 20 bis 60°C, insbesondere 30 bis 50°C, und einem pH-Wert von z.B. 4 bis 7, insbesondere 5 bis 6.

Verbindungen der Formeln (10) oder (11), worin A₁ und A₂ einen Rest der Formel (4) bedeuten, mit R₁ in der Bedeutung eines gegebenenfalls substituierten Phenyl- oder Naphthylrestes, können beispielsweise erhalten werden, indem man eine Verbindung der Formel (5) mit einer den Rest R₁ einführenden Verbindung, beispielsweise die Verbindung der Formel (13b)

H₂N-R₁ (13b),

in einer Bucherer-Reaktion umsetzt. Die Bucherer-Reaktion ist an sich bekannt und ausführlich beschrieben z.B in Org. Reactions, 1, (1942) 105.

Das Mengenverhältnis der Farbstoffe der Formeln (1), (2) und (3) in den erfindungsgemässen Farbstoffmischungen kann in weiten Bereichen varieren und hängt vom Mengenverhältnis der Kupplungskomponenten der Formeln (10) und (11) ab, welche mit der Diazokomponente der Formel (9) umgesetzt werden. Hierbei werden die Verbindungen der Formeln (10) und (11) in einem molaren Verhältnis zueinander eingesetzt, welches grösser als 5:95 und geringer als 95:5 ist. Vorzugsweise setzt man die Verbindungen der Formeln (10) und (11) hierbei in einem molaren Verhältnis von 10:90 bis 90:10, insbesondere in einem molaren Verhältnis von 20:80 bis 80:20 ein.

Die Farbstoffmischungen der Farbstoffe der Formeln (1), (2) und (3) können auch z.B. durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen z.B. durch Zerstäubungstrocknung der wässrigen Farbstoffmischungen hergestellt werden.

Die Farbstoffmischungen enthalten bevorzugt 5 bis 95 Gew.%, insbesondere 10 bis 90 Gew.% und vorzugsweise 20 bis 80 Gew.% eines Farbstoffs der Formel (1), bezogen auf die Gesamtmenge der Farbstoffe der Formeln (1), (2) und (3). Besonders bevorzugt enthalten die Farbstoffmischungen 25 bis 75 Gew.% eines Farbstoffs der Formel (1), bezogen auf die Gesamtmenge der Farbstoffe der Formeln (1), (2) und (3).

Die Farbstoffe der Formeln (1), (2) und (3) der erfindungsgemässen Farbstoffmischungen, welche einen Rest A₁ der Formel (5) und einen Rest A₂ der Formel (4) enthalten, können auch erhalten werden, indem man zunächst eine Verbindung der Formel (7) diazotiert, auf eine Verbindung der Formel (8) kuppelt, die resultierende Verbindung der Formel (9) diazotiert und auf eine Verbindung der Formel (10) kuppelt, worin der Rest A₁ einen Rest der Formel (5) bedeutet und anschliessend einen Teil der Aminogruppen des Restes A₁ des so erhaltenen Farbstoffes der Formel (2) mit einer den Rest R1 einführenden Verbindung umsetzt.

Die Farbstoffe der erfindungsgemässen Farbstoffmischungen liegen entweder in der Form ihrer freien Säure oder vorzugsweise ais deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Ein weiterer Gegenstand der vorliegenden Erfindung sind Azofarbstoffe der Formel (12) 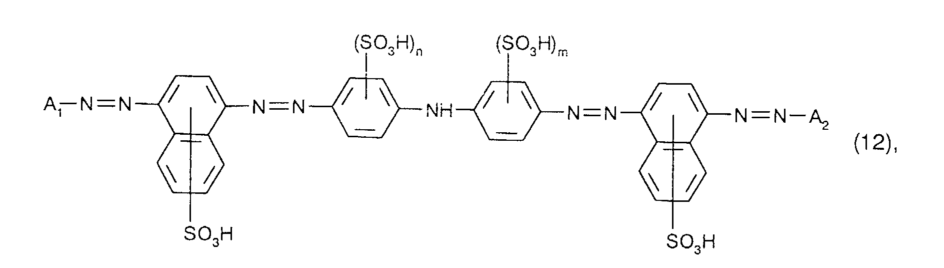 dadurch gekennzeichnet, dass
A₁ und A₂ unabhängig voneinander je einen Rest der Formeln (4), (5) oder (6) 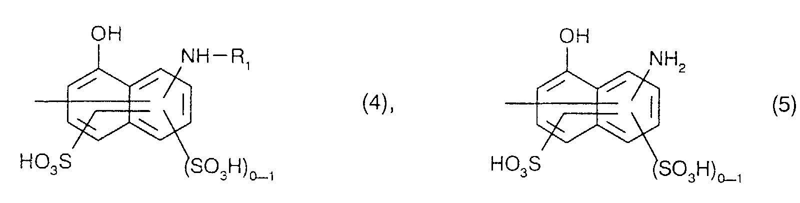 oder 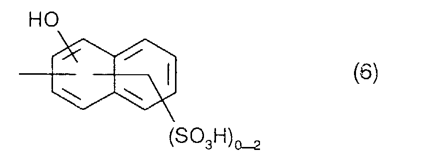 bedeuten, worin
R₁, n und m die oben angegebenen Bedeutungen und Bevorzugungen haben mit der Massgabe, dass, falls A₁ und A₂ identische Reste der Formel (5) sind und die Summe von n und m die Zahl 1 ist, die Reste A₁ und A₂ nicht gleichzeitig 2- oder 3- oder 4-Amino-8-hydroxy-6-sulfonaphth-7-yl oder 1-Amino-8-hydroxy-3,6-disulfonaphth-7-yl bedeuten.

Die Azofarbstoffe der Formel (12) sind besonders bevorzugt Farbstoffe der Formel (12a) 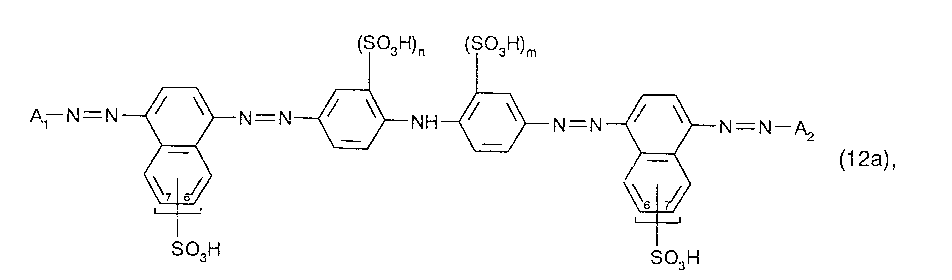 worin
die Sulfogruppen der Naphthalinsulfonsäurekomponenten unabhängig voneinander je in 6-oder 7-Position gebunden sind,
A₁ und A₂ unabhängig voneinander je einen Rest der Formeln (4a), (5a), (6a) oder (6b) 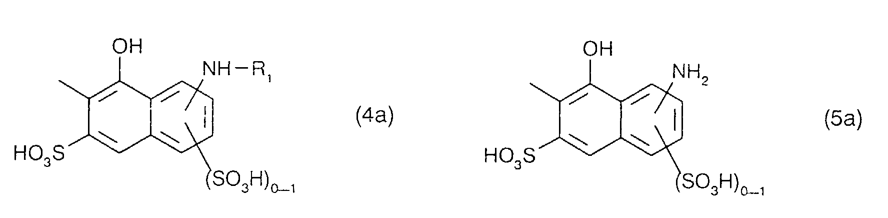 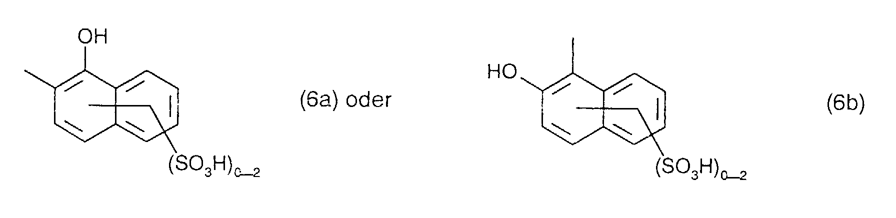 bedeuten, worin
R₁ gegebenenfalls durch C₁-C₄-Alkyl, C₁-C₄-Alkoxy, Halogen oder Sulfo substituiertes Phenyl, insbesondere Phenyl oder ein Rest der Formel -CO-R ist, wobei
R Methyl, Aethyl, Methoxy, Aethoxy oder Phenyl bedeutet und
die Summe von n und m die Zahl 0 oder 1 ist.

In den erfindungsgemässen Azofarbstoffen haben die Reste A₁ und A₂ unterschiedliche oder identische Bedeutungen.

In einer bestimmten Ausführungsform haben die Reste A₁ und A₂ in den erfindungsgemässen Azofarbstoffen unterschiedliche Bedeutungen.

Die Azofarbstoffe der Formel (12) können prinzipiell in der gleichen Weise wie die Farbstoffe der Formeln (1), (2) oder (3) der erfindungsgemässen Farbstoffmischungen erhalten werden, z.B. indem man eine Verbindung der Formel (7) diazotiert, auf eine Verbindung der Formel (8) kuppelt, die resultierende Verbindung der Formel (9) diazotiert und auf die Verbindungen der Formeln (10) und (11) kuppelt. Für den Fall, dass A₁ und A₂ nicht identische Bedeutungen haben, wählt man beispielsweise das molare Verhältnis der Verbindungen der Formeln (10) und (11) so, dass die Ausbeute der bezüglich der Reste A₁ und A₂ unsymmetrischen Verbindung der Formel (1) möglichst hoch ist, beispielsweise ein molares Verhältnis von 1:1, und trennt die bezüglich der Reste A₁ und A₂ symmetrischen Verbindungen der Formeln (2) und/oder (3) durch geeignete Reinigungsmethoden, beispielsweise durch Umkristallisation oder durch Umfällung, von der unsymmetrischen Verbindung der Formel (1) ab.

Ein weiterer Gegenstand der vorliegenden Erfindung ist die Verwendung der erfindungsgemässen Farbstoffmischungen zum Färben oder Bedrucken von stickstoffhaltigen und insbesondere hydroxylgruppenhaltigen Fasermaterialien.

Die erfindungsgemässen Farbstoffmischungen eignen sich also zum Färben und Bedrucken von stickstoffhaltigen oder insbesondere von cellulosischen Fasermaterialien, vorzugsweise von textilen Fasermaterialien, aus Seide, Wolle oder synthetischen Polyamiden, sowie bevorzugt aus den cellulosischen Fasern, wie Rayon, Baumwolle oder Hanf.

Bezüglich ihrer färberischen Eigenschaften können sie als direktziehende oder Direktfarbstoffe (C.I. direct dyes) bezeichnet werden.

Ebenfalls können textile Fasermaterialien aus Mischfasern, wie z.B. aus Wolle/Baumwoll-, Polyamid/Baumwoll-, Polyacryl/Baumwoll- oder insbesondere Polyester/Baumwoll-Mischfasern durch Einbad-Färbeverfahren und in Gegenwart von Farbstoffen für die jeweils anderen Fasertypen gefärbt werden.

Die textilen Fasermaterialien können in den verschiedensten Verarbeitungszuständen vorliegen, wie z.B. als Faser, Garn, Gewebe oder Gewirke.

Neben den textilen Substraten können auch Leder und Papier mit den erfindungsgemässen Farbstoffmischungen gefärbt werden.

Man erhält egale Färbungen in Farbtönen mit guten Allgemeinechtheiten, insbesondere guten Reib-, Nass-, Nassreib-, Schweiss- und Lichtechtheiten. Sofern nötig, kann man die Nassechtheiten, insbesondere die Waschechtheit, der erhaltenen Direktfärbungen und - drucke durch eine Nachbehandlung mit sog. Fixiermitteln noch wesentlich verbessern.

Die erfindungsgemässen Farbstoffmischungen sind gut mit anderen Farbstoffen, insbesondere Dispersionsfarbstoffen kombinierbar. Die erfindungsgemässen Farbstoffmischungen weisen eine ausreichende Hochtemperatur-Stabilität auf und lassen sich so unter den Färbebedingungen für Polyesterfasern, d.h. bei Temperaturen im Bereich von etwa 100 bis 150°C, vorzugsweise von 110 bis 130°C, aus wässriger Flotte und bei einem pH-Wert von 4 bis 7,5, vorzugsweise 5 bis 7, färben.

Damit ist es möglich, übliche Dispersionsfarbstoffe zusammen mit den erfindungsgemässen Farbstoffmischungen in einem einstufigen, einbadigen Verfahren zum Färben von Polyester/Baumwoll-Mischfasern (Mischgewebe) einzusetzen, wobei beide Faserarten gleichmässig und echt durch den jeweiligen Farbstoff angefärbt werden. Verwendet man einen Dispersionsfarbstoff mit gleicher Nuance wie die erfindungsgemässen Farbstoffmischungen sie aufweisen, so ist es auch möglich Ton-in-Ton-Färbungen zu erhalten.

Mit der Bereitstellung der erfindungsgemässen Farbstoffmischungen kann man das Färben von textilen Mischfasern (Mischgeweben), z.B. solchen aus Polyester- und Cellulosefasern, wesentlich vereinfachen. Die an sich übliche Färbung jeder Faserart einer Fasermischung in einem separaten Arbeitsgang unter Anwendung unterschiedlicher Färbebedingungen ist damit nicht mehr nötig.

Die folgenden Beispiele dienen zur Erläuterung der Erfindung. Teile und Prozente beziehen sich auf das Gewicht, sofern nicht anders angegeben. Gewichtsteile und Volumenteile stehen in gleicher Beziehung zueinander wie Kiiogramm und Liter. Die Temperaturen sind in Celsiusgraden angegeben.

Beispiel 1: 27,9 Teile 4,4'-Diaminodiphenylamin-2-sulfonsäure werden in 400 Teilen Wasser verrührt und mit 47,5 Teilen konzentrierter Salzsäure versetzt. Nach dem Abkühlen auf 0-5°C werden 58,5 Teile einer 4-normalen Natriumnitritlösung zugetropft. Nach beendeter Diazotierung wird vom ungelösten Rückstand durch Klärfiltration abgetrennt. Die so erhaltene Lösung wird zu einer Lösung bestehend aus 44,6 Teilen 1-Aminonaphthalin-6-sulfonsäure in 600 Teilen Wasser bei pH 8 zugetropft. Der pH wird während der Kupplung durch Zugabe von Natronlauge bei pH 8 bis 8,5 gehalten. Nach beendeter Kupplung wird die Reaktionsmischung sauer gestellt und das ausgefallene Produkt abfiltriert. Nach Trocknung erhält man eine Verbindung, welche in Form der freien Säure der Formel (101) 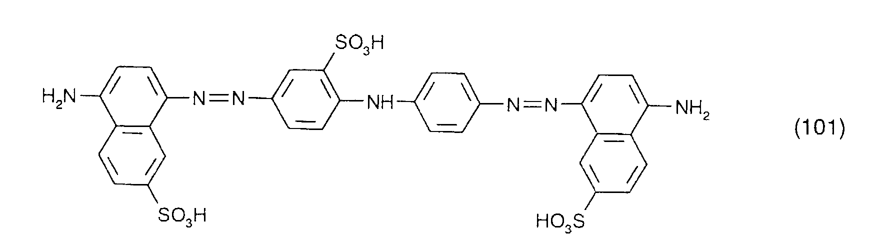 entspricht.

Beispiel 2: Auf gleiche Weise, wie in Beispiel 1 beschrieben, können an Stelle von 44,6 Teilen 1-Aminonaphthalin-6-sulfonsäure, 44.6 Teile 1-Aminonaphthalin-7-sulfonsäure als Kupplungskomponente verwendet werden. Die so hergestellte Verbindung entspricht in Form der freien Säure der Formel (102)

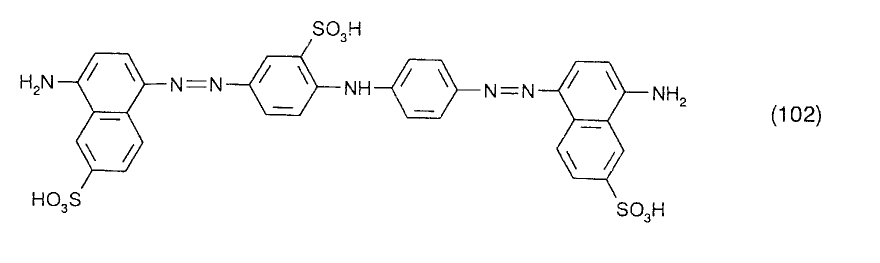

Beispiel 3: Werden anstelle von 44,6 Teilen 1-Aminonaphthalin-6-sulfonsäure, wie in Beispiel 1 beschrieben, 44,6 Teile einer Mischung aus 1-Aminonaphthalin-6-sulfonsäure und 1-Aminonaphthalin-7-sulfonsäure als Kupplungskomponente verwendet, so erhält man ein Gemisch der Verbindungen, welche in Form der freien Säure der Formel (101), (102), (103) und (104) entsprechen.

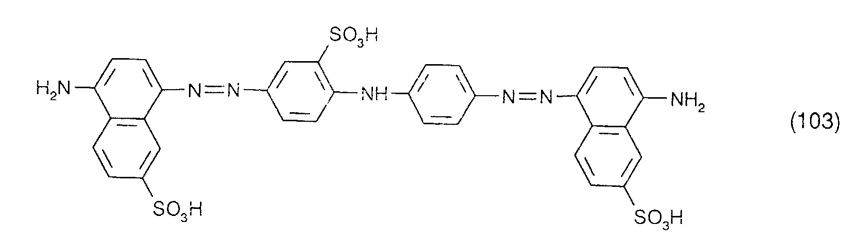

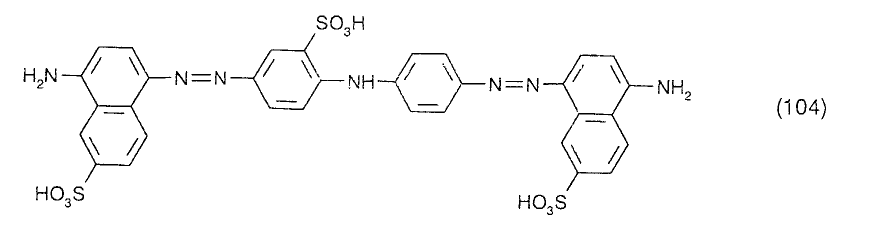

Beispiel 4: 27,9 Teile 4,4'-Diaminodiphenylamin-2-sulfonsäure werden in 400 Teilen Wasser verrührt und mit 47,5 Teilen konzenirierter Salzsäure versetzt. Nach dem Abkühlen auf 0-5°C werden 58,5 Teile einer 4-normalen Natriumnitritlösung zugetropft. Nach beendeter Diazotierung wird vom ungelösten Rückstand durch Klärfiltration abgetrennt. Zu dieser Lösung tropft man eine Lösung bestehend aus 22,7 Teilen 1-Aminonaphthalin-6-sulfonsäure in 400 Teilen Wasser zu. Der pH wird während der Kupplung bei pH 3 gehalten. Man lässt 2-3 Stunden ausreagieren. Hierzu tropft man anschliessend, bei pH 6, eine Lösung bestehend aus 22,7 Teilen 1-Aminonaphthalin-7-sulfonsäure in 400 Teilen Wasser zu und stellt den pH mit einer 4-normalen Natronlauge auf pH 6. Man lässt über Nacht ausreagieren. Das Produkt wird durch Zugabe von Natriumchlorid ausgefällt und anschliessend abfiltriert. Nach Trocknung erhäit man eine Verbindung, welche in Form der freien Säure der Formel (103) entspricht.

Beispiel 5: Verfährt man wie in Beispiel 4 beschrieben, tropft jedoch anstelle von 22,7 Teilen 1-Aminonaphthalin-7-sulfonsäure in 400 Teilen Wasser eine Mischung bestehend aus 11,35 Teilen 1-Aminonaphthalin-7-sulfonsäure und 11,35 Teilen 1-Aminonaphthalin-6-sulfonsäure in 400 Teilen Wasser zu, so erhält man ein Gemisch von Verbindungen, welche in Form der freien Säure der Forme! (101) und (103) entsprechen.

Beispiel 6: 22,4 Teile der Verbindung der Formel (101) aus Beispiel 1 werden bei einer Temperatur von 75°C in 400 Teilen Wasser gelöst und mit 17,6 Teilen einer 4-normalen Natriumnitritlösung versetzt. Die Lösung wird innerhalb von 20 Minuten bei einer Temperatur von 0 bis 5°C auf 400 Teile Eis und 14,3 Teile konzentrierter Salzsäure getropft. Die so erhaltene braune Suspension wird eine Stunde gerührt und anschliessend wird der pH mit einer Natriumcarbonatlösung (10%) auf einen Wert von pH 4 gestellt. Die Diazosuspension wird dann innerhalb von 60 Minuten bei einer Temperatur von 0 bis 5°C auf eine Kupplungslösung getropft, welche 7,2 Teile 2-Amino-8-naphthol-6-sulfonsäure und 7,2 Teile 2-Amino-5-naphthol-7-sulfonsäure in 400 Teilen Wasser und 63,5 Teilen 1-normaler Natriumhydroxidlösung enthält. Während der Kupplung wird der pH bei einem Wert von 5 gehalten. Man lässt 2 Stunden bei einer Temperatur von 0 bis 5°C und dann über Nacht bei Raumtemperatur ausreagieren. Die blauschwarze Suspension wird abfiltriert und mit Wasser gewaschen. Anschliessend wird der feuchte Rückstand mit 1000 Teilen Wasser verrührt und der pH mit etwa 67 Teilen 1-normaler Natriumhydroxidlösung auf einen Wert von 8 gestellt. Bei einer Temperatur von 60°C werden 70 Teile Natriumchlorid hinzugegeben und die feine Suspension wird bei einer Temperatur von 50°C abfiltriert. Nach Trocknung erhält man eine Mischung von Verbindungen, welche in Form der freien Säure den Formeln (105), (106), (107) und (108) 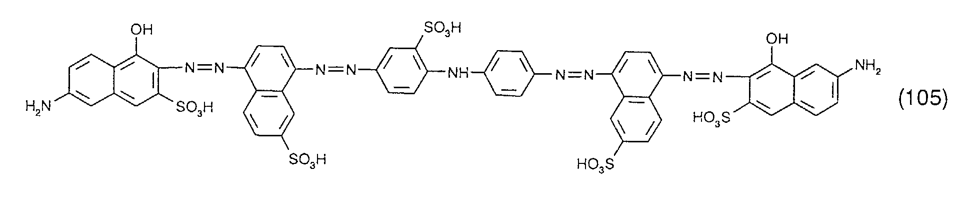 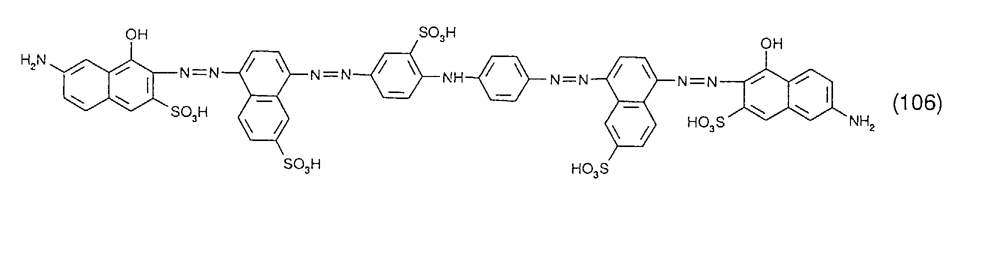 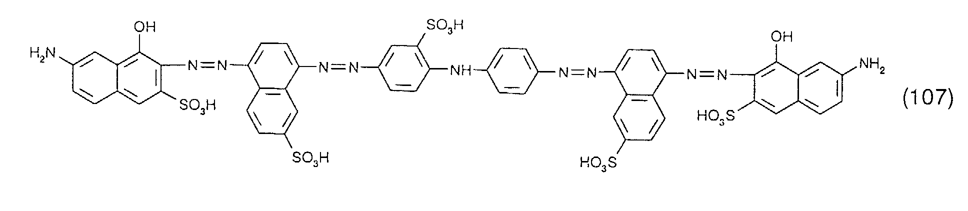 und 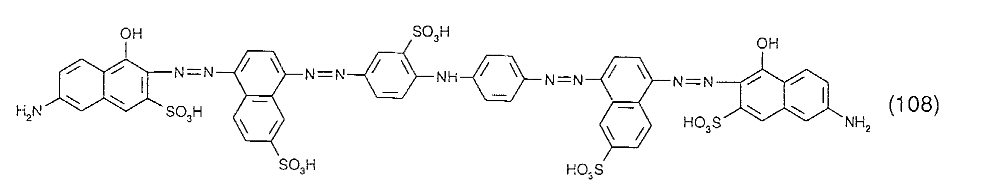 entsprechen, zu etwa 50 Gew.% aus den Verbindungen der Formel (105) und (106) bestehen und Baumwolle in marineblauen Farbtönen färben. Der λₘₐₓ-Wert der Farbstoffmischung beträgt 578 nm.

Beispiel 7: Verfährt man wie in Beispiel 6 angegeben, verwendet jedoch anstelle von 22,4 Teilen der Verbindung der Formel (101) 22,4 Teile der Verbindung der Formel (102) aus Beispiel 2, so erhält man eine Mischung von Verbindungen, welche in Form der freien Säure den Formeln (109), (110), (111) und (112) 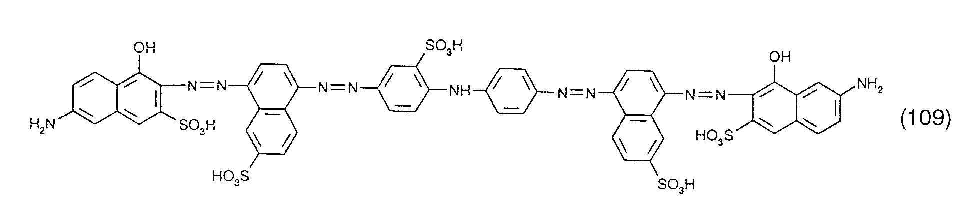 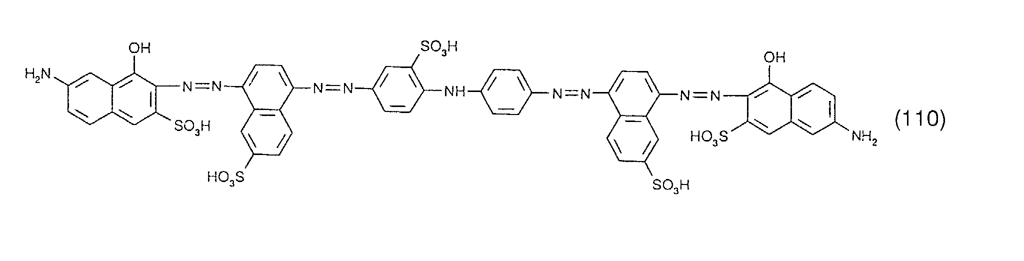 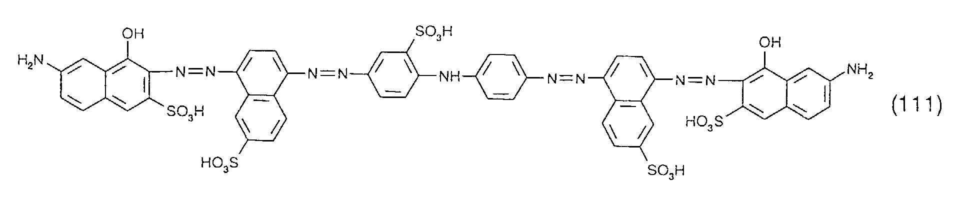 und 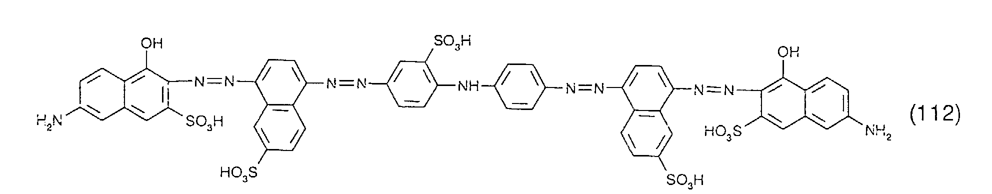 entsprechen, zu etwa 50 Gew.% aus den Verbindungen der Formel (109) und (110) bestehen und Baumwolle in marineblauen Farbtönen färben. Der λₘₐₓ-Wert der Farbstoffmischung beträgt 590 nm.

Beispiel 8: Verfährt man wie in Beispiel 6 angegeben, verwendet jedoch anstelle von 22,4 Teilen der Verbindung der Formel (101) 22,4 Teile der Verbindung der Formel (103) aus Beispiel 4, so erhält man eine Mischung von Verbindungen, welche in Form der freien Säure den Formeln (113), (114), (115) und (116)

A₁―L― L'―A₂ (113)

A₂―L―L'―A₁ (114)

A₁―L―L'―A₁ (115)

und

A₂―L―L'―A₂ (116)

entsprechen, worin 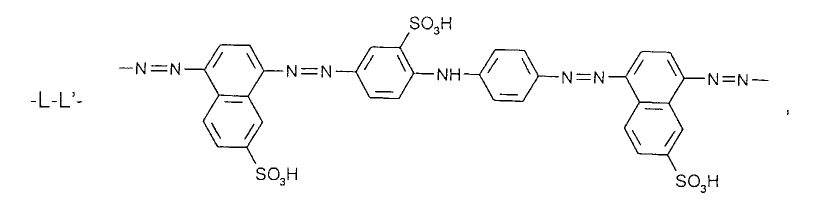 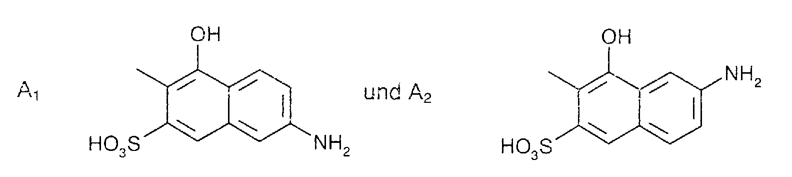 bedeuten, zu etwa 50 Gew.% aus den Verbindungen der Formel (113) und (114) bestehen und Baumwolle in marineblauen Farbtönen färben.

Beispiel 9: Verfährt man wie in Beispiel 6 angegeben, verwendet jedoch anstelle von 22,4 Teilen der Verbindung der Formel (101) 22,4 Teile des Gemisches der Verbindungen aus Beispiel 5, so erhält man eine Mischung von Verbindungen, welche in Form der freien Säure den Formeln (105), (106), (107), (108), (113), (114), (115) und (116) entsprechen, zu etwa 50 Gew.% aus den Verbindungen der Formel (105), (106), (113) und (114) bestehen und Baumwolle in marineblauen Farbtönen färben. Der λₘₐₓ-Wert der Farbstoffmischung beträgt 583 nm.

Beispiel 10: Verfährt man wie in Beispiel 6 angegeben, verwendet jedoch anstelle von 22,4 Teilen der Verbindung der Formel (101) 22,4 Teile des Gemisches der Verbindungen aus Beispiel 3, so erhält man eine Mischung von Verbindungen, welche in Form der freien Säure den Formeln (117), (118) und (119)

A₁―B―A₂ (117)

A₁―B―A₁ (118)

und

A₂―B―A₂ (119)

entsprechen, worin 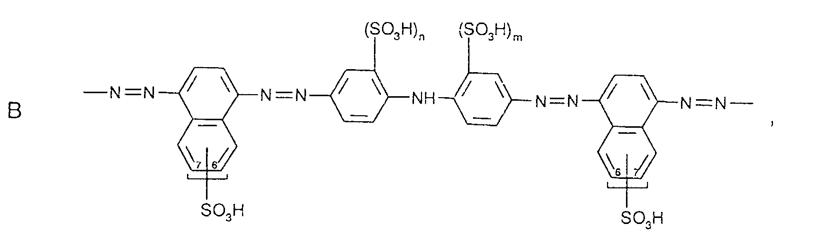 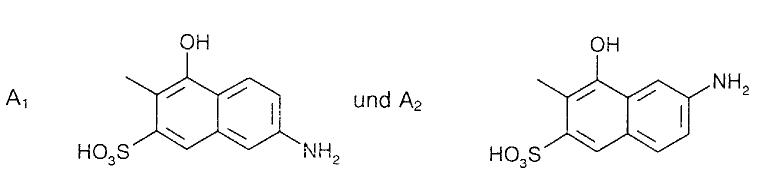 bedeuten, die Sulfogruppen der Aminonaphthalinsulfonsäurekomponenten der Komponente B unabhängig voneinander je in 6- oder 7-Position gebunden sind und die Summe von n und m die Zahl 1 ist. Die Mischungen aus den Verbindungen der Formel (117), (118) und (119) bestehen zu etwa 50 Gew.% aus der Verbindung der Formel (117) und färben Baumwolle in marineblauen Farbtönen. Der λₘₐₓ-Wert der Farbstoffmischung beträgt 589 nm

Beispiel 11: Verfährt man wie in Beispiel 6 angegeben, verwendet jedoch anstelle von 7,2 Teilen 2-Amino-8-naphthol-6-sulfonsäure und 7,2 Teilen 2-Amino-5-naphthol-7-sulfonsäure eine Mischung aus 7,2 Teilen 2-Amino-5-naphthol-7-sulfonsäure und 9,9 Teilen 2-Phenylamino-5-naphthol-7-sulfonsäure, so erhält man eine Mischung von Verbindungen, welche in Form der freien Säure den Formeln (120), (121), (122) und (123) 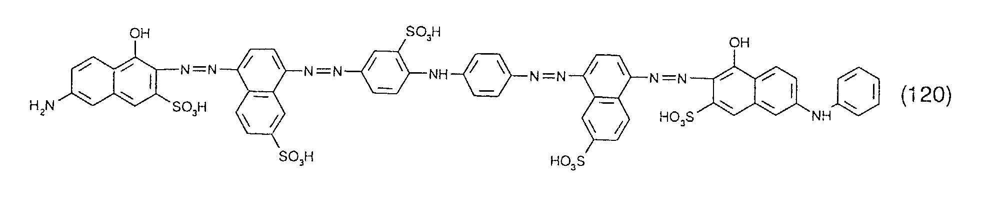 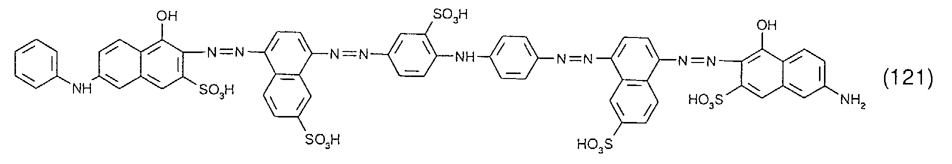 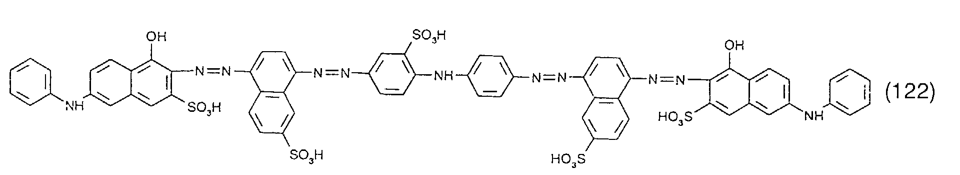 und 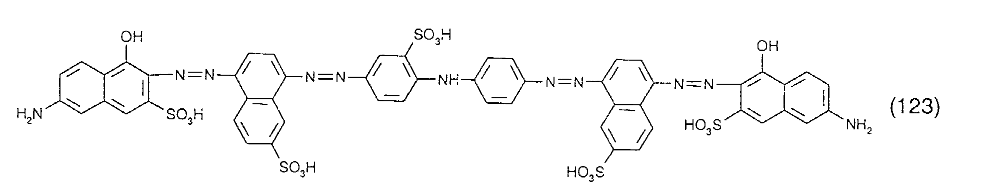 entsprechen, zu etwa 50 Gew.% aus den Verbindungen der Formel (120) und (121) bestehen und Baumwolle in marineblauen Farbtönen färben. Der λₘₐₓ-Wert der Farbstoffmischung beträgt 584 nm.

Beispiel 12: Verfährt man wie in Beispiel 6 angegeben, verwendet jedoch anstelle von 22,4 Teilen der Verbindung der Formel (101) 22,4 Teile des Gemisches der Verbindungen aus Beispiel 5 und anstelle von 7,2 Teilen 2-Amino-8-naphthol-6-sulfonsäure und 7,2 Teilen 2-Amino-5-naphthol-7-sulfonsäure eine Mischung aus 7,2 Teilen 2-Amino-5-naphthol-7-sulfonsäure und 9,9 Teilen 2-Phenylamino-5-naphthol-7-sulfonsäure, so erhält man eine Mischung von Verbindungen, welche in Form der freien Säure den Formeln (120), (121), (122), (123) und (124), (125), (126) und (127)

A₁―L―L'―A₂ (124)

A₂―L―L'―A₁ (125)

A₁―L―L'―A₁ (126)

und

A₂―L―L'―A₂ (127)

entsprechen, worin 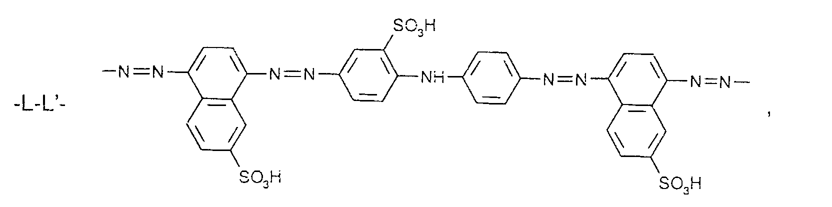 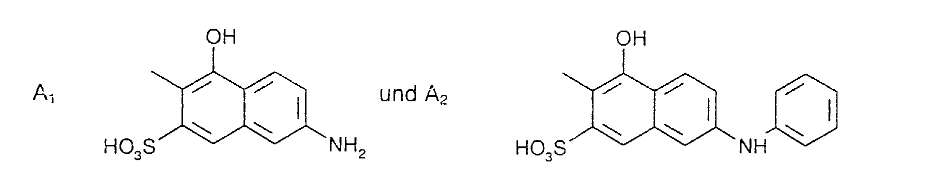 bedeuten, zu etwa 50 Gew.% aus den Verbindungen der Formel (120), (121), (124) und (125) bestehen und Baumwolle in marineblauen Farbtönen färben. Der λₘₐₓ-Wert der Farbstoffmischung beträgt 590 nm.

Beispiel 13: Verfährt man wie in Beispiel 6 angegeben, verwendet jedoch anstelle von 22,4 Teilen der Verbindung der Formel (101) 22,4 Teile des Gemisches der Verbindungen aus Beispiel 5 und anstelle von 7,2 Teilen 2-Amino-8-naphthol-6-sulfonsäure und 7,2 Teilen 2-Amino-5-naphthol-7-sulfonsäure eine Mischung aus 11,5 Teilen 2-Amino-5-naphthol-7-sulfonsäure und 3,9 Teilen 2-Phenylamino-5-naphthol-7-sulfonsäure, so erhält man eine Mischung von Verbindungen, welche in Form der freien Säure den Formeln (120), (121), (122), (123), (124), (125), (126) und (127) entsprechen, zu etwa 33 Gew.% aus den Verbindungen der Formel (120), (121), (124) und (125) bestehen und Baumwolle in marineblauen Farbtönen färben. Der λₘₐₓ-Wert der Farbstoffmischung beträgt 590 nm.

Beispiele 14 bis 22: Verfährt man wie in Beispiel 6 angegeben, verwendet jedoch anstelle von 7,2 Teilen 2-Amino-8-naphthol-6-sulfonsäure und 7,2 Teilen 2-Amino-5-naphthol-7-sulfonsäure die jeweils äquimolare Menge einer Mischung aus den in Tabelle 1 angegebenen Kupplungskomponenten, so erhält man Mischungen von Verbindungen, welche in Form der freien Säure den Formeln

A₁―B―A₂ , A₁―B―A₁ und A₂―B―A₂

entsprechen, worin B 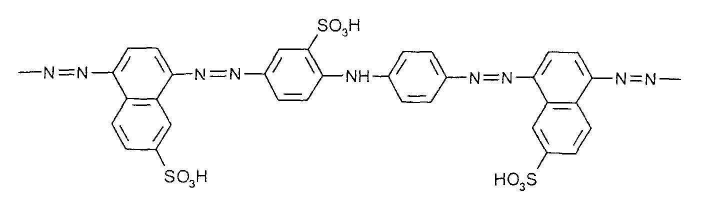 bedeutet.

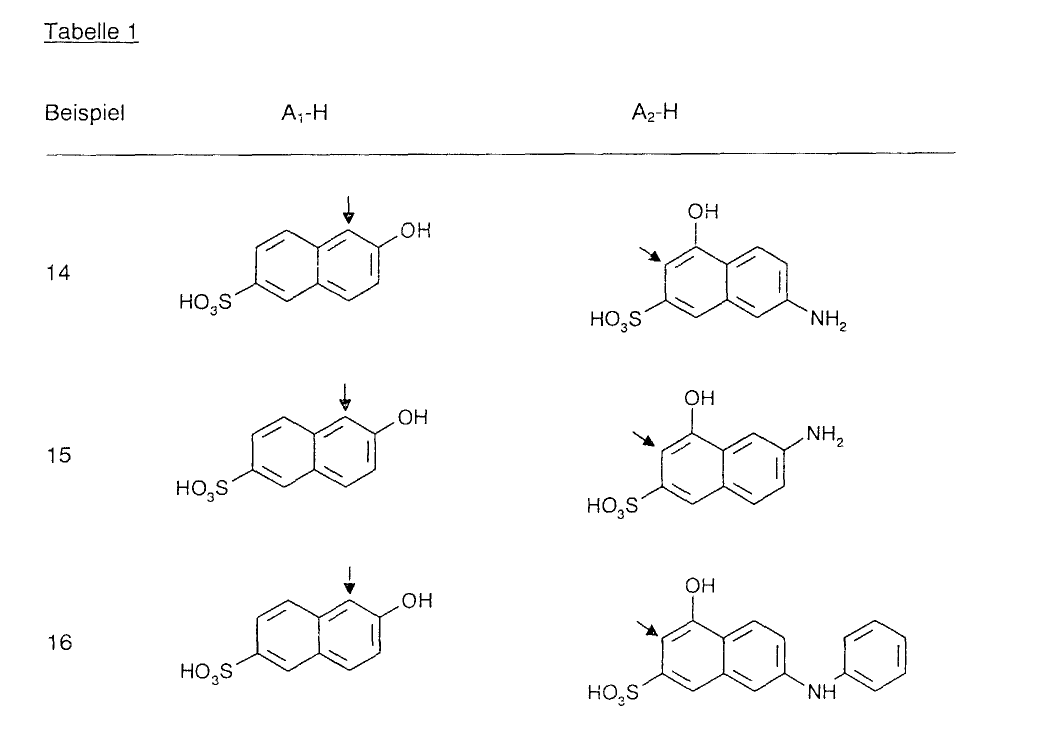

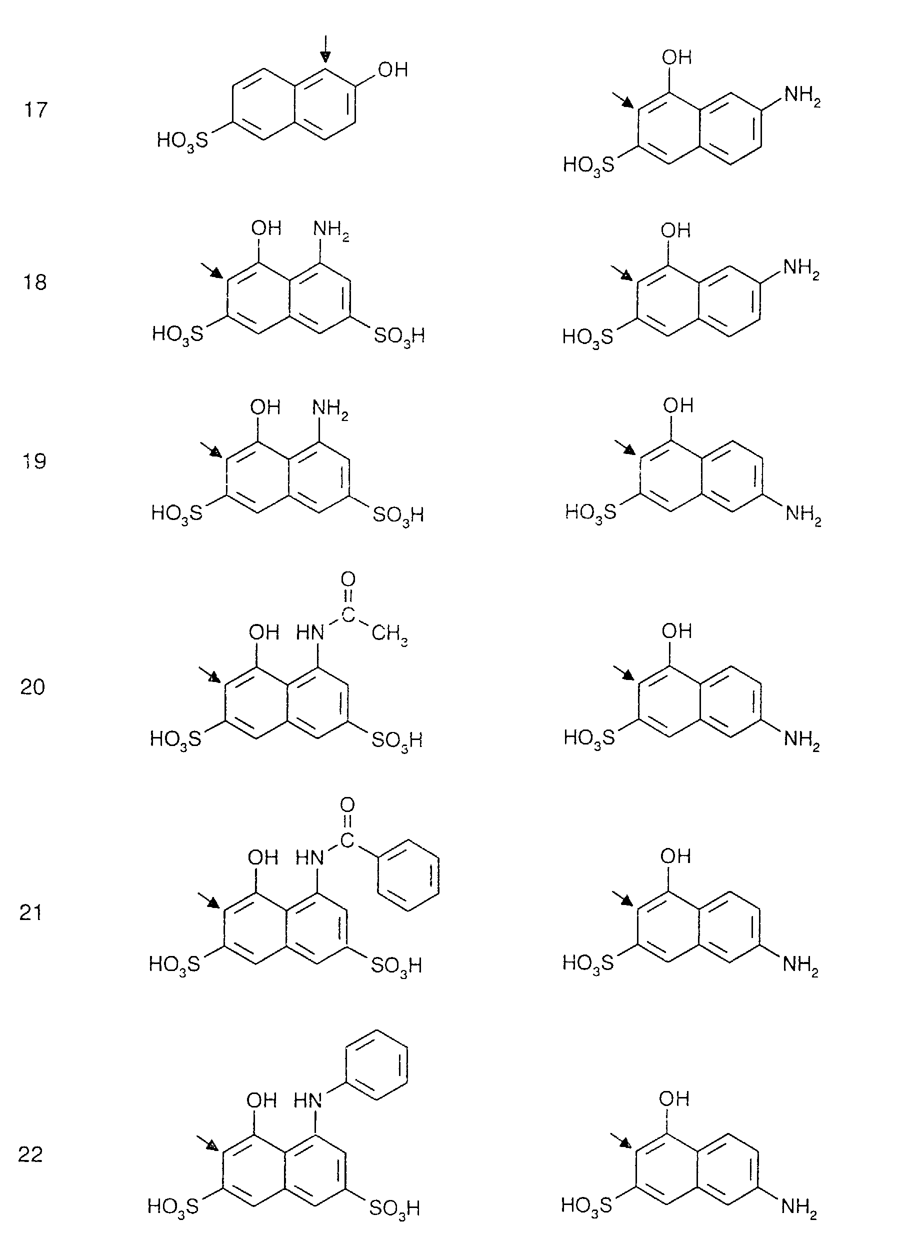

Der Pfeil in Tabelle 1 bezeichnet jeweils die Position der Kupplung. Die Mischungen der Beispiele 14 bis 22 färben Baumwolle in marineblauen Farbtönen.

In analoger Weise zu den Angaben in den Beispielen 14 bis 22 können anstelle von 22,4 Teilen der Verbindung der Formel (101), entweder 22,4 Teile der Verbindung der Formel (102) aus Beispiel 2, 22,4 Teile der Verbindung der Formel (103) aus Beispiel 4, eine Mischung der Verbindungen der Formeln (101), (102), (103) und (104) aus Beispiel 3 oder eine Mischung der Verbindungen der Formeln (101) und (103) aus Beispiel 5 verwendet werden, wobei Farbstoffmischungen erhalten werden, die Baumwolle in marineblauen Farbtönen färben.

Beispiel 23: Verfährt man wie in Beispiel 6 angegeben, verwendet jedoch anstelle der Mischung aus 7,2 Teilen 2-Amino-8-naphthol-6-sulfonsäure und 7,2 Teilen 2-Amino-5-naphthol-7-sulfonsäure 19,7 Teile 2-Phenylamino-5-naphthol-7-sulfonsäure, so erhält man eine Verbindung, welche in Form der freien Säure der Formel (128) 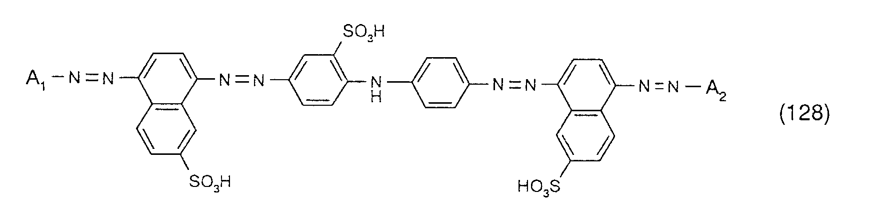 entspricht, worin
A₁ und A₂ 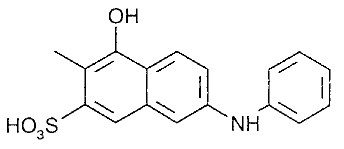 bedeuten und welche Baumwolle in marineblauen Farbtönen färbt.

Beispiele 24 bis 27: Verfährt man wie in Beispiel 23 angegeben, verwendet jedoch anstelle von 19,7 Teilen 2-Phenylamino-5-naphthol-7-sulfonsäure eine äquimolare Menge der in Tabelle 2 angegebenen Kupplungskomponenten, so erhält man Verbindungen, welche in Form der freien Säure der Formel A₁―B―A₂ entsprechen, worin B 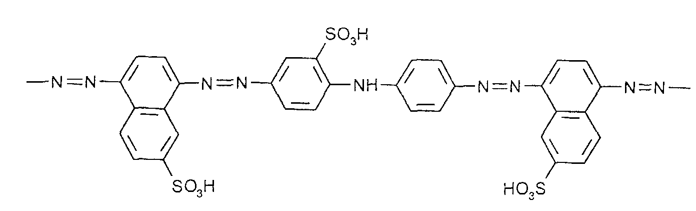 bedeutet und A₁ und A₂ identische Bedeutungen haben.

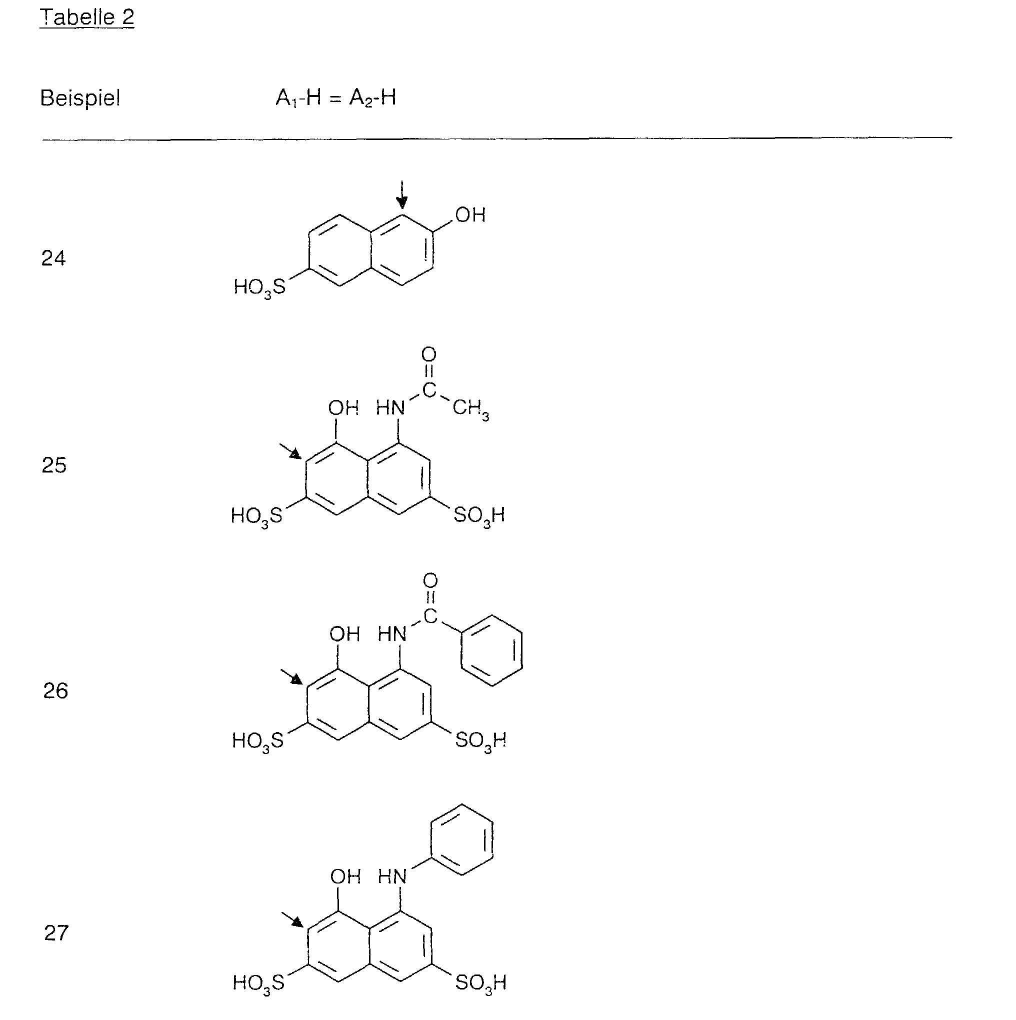

Der Pfeil in Tabelle 2 bezeichnet jeweils die Position der Kupplung. Die Farbstoffe der Beispiele 24 bis 27 färben Baumwolle in marineblauen Farbtönen.

In analoger Weise zu den Angaben in den Beispielen 23 bis 27 können anstelle von 22,4 Teilen der Verbindung der Formel (101), entweder 22,4 Teile der Verbindung der Formel (102) aus Beispiel 2, 22,4 Teile der Verbindung der Formel (103) aus Beispiel 4, eine Mischung der Verbindungen der Formeln (101), (102), (103) und (104) aus Beispiel 3 oder eine Mischung der Verbindungen der Formeln (101) und (103) aus Beispiel 5 verwendet werden, wobei Farbstoffe oder Farbstoffmischungen erhalten werden, die Baumwolle in marineblauen Farbtönen färben.

### Färbevorschrift 1

10 Teile Baumwollgewebe (gebleicht und mercerisiert) werden bei ca. 30°C in ein Färbebad eingebracht, welches 200 Teile Wasser und 0,2 Teile der Farbstoffmischung des Beispiels 5 enthält. Die Flotte wird innerhalb von 30 Minuten auf 95°C erhitzt und 15 Minuten bei dieser Temperatur belassen. Dann werden 4 Teile Natriumsulfat zugesetzt und noch weitere 45 Minuten bei 95°C gefärbt. Danach wird das Färbebad innerhalb von 15 Minuten auf 80°C abgekühlt und noch 15 Minuten bei dieser Temperatur belassen. Die Färbung wird dann gründlich mit kaltem Wasser gespült und getrocknet.

### Färbevorschrift 2

10 Teile einer 50:50 Fasermischung aus Polyester und Baumwolle werden bei ca. 50°C in ein Färbebad eingebracht, welches 200 Teile Wasser, ein Farbstoffgemisch bestehend aus 0,1 Teilen C.I. Disperse Blue 79 und 0,1 Teilen des Farbstoffgemisches gemäss Beispiel 5, 0,4 Teile Ammoniumsulfat sowie 0,2 Teile eines anionischen Dispersionsmittels (z.B. Formaldehyd-Kondensationsprodukt von Naphthalinsulfonsäure) enthält. Das Färbebad wird mit Ameisensäure auf einen pH-Wert von 5,5 eingestellt, 2 Teile Natriumsulfat zugesetzt und dann innerhalb von 45 Minuten auf ca. 130°C aufgeheizt. Man färbt weitere 45 Minuten bei 130°C, kühlt dann das Färbebad innerhalb von 30 Minuten auf ca. 80°C ab und belässt es weitere 45 Minuten bei dieser Temperatur. Die Färbung wird dann gründlich mit kaltem Wasser gespült und getrocknet.

### Färbevorschrift 3

Man verfährt wie in den Färbevorschriften 1 oder 2 beschrieben, gibt jedoch nach Abschluss des Färbevorgangs die kalt gespülte Färbung in ein frisches ca. 30°C warmes Bad, welches 200 Teile Wasser und 0,2-0,6 Teile eines kationischen Nachbehandlungsmittels (Amin-Formaldehyd-Dicyandiamid-Kondensationsprodukt oder Zubereitung auf der Basis von Dicyandiamid und Diäthylentriamin) enthält. Die Färbung wird 30 Minuten bei 30°C nachbehandelt und anschliessend ohne weiteren Spülprozess getrocknet; man erhält eine Färbung mit verbesserten Nassechtheiten.

### Färbevorschrift 4

Man verfährt wie in den Färbevorschriften 1 oder 2 beschrieben, gibt jedoch nach Abschluss des Färbevorgangs die kalt gespülte Färbung in ein frisches ca.25°C warmes Bad, welches 200 Teile Wasser, 1 Teil Natriumsulfat und 0,6 Teile eines faserreaktiven kationischen Nachbehandlungsmittels auf Basis von N-Methyldialkylamin und Epichlorhydrin enthält. Die Temperatur wird innerhalb von 15 Minuten auf 40°C erhöht, 0,8 Teile 30 %ige Natriumhydroxidlösung zugegeben und die Färbung weitere 45 Minuten bei 40°C behandelt. Die Färbung wird schliesslich heiss gespült und getrocknet; sie weist verbesserte Nassechtheiten auf.

## Patentansprüche

1. Farbstoffmischungen, dadurch gekennzeichnet, dass sie mindestens einen Farbstoff der Formel (1) 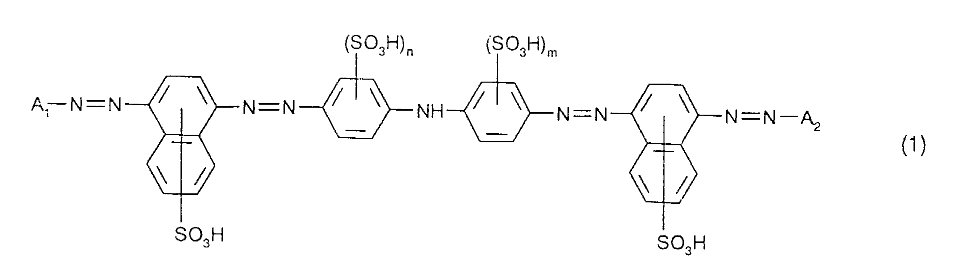 zusammen mit mindestens einem Farbstoff der Formeln (2) oder (3) 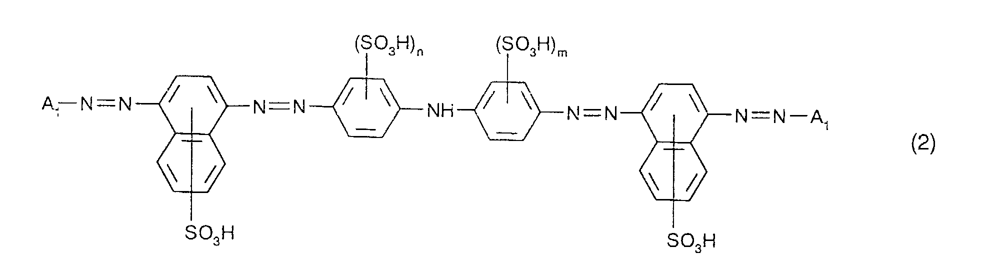 oder 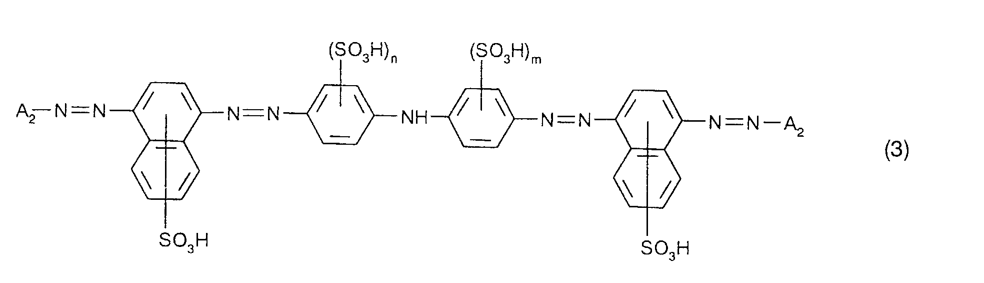 enthalten, worin
A₁ und A₂ unabhängig voneinander je den Rest einer Kupplungskomponente der Benzol- oder Naphthalinreihe oder der heterocyclischen Reihe bedeuten und
n und m die Zahlen 0 oder 1 sind.

2. Farbstoffmischungen, gemäss Anspruch 1, dadurch gekennzeichnet, dass A₁ und A₂ unabhängig voneinander je einen Rest der Formeln (4), (5) oder (6) 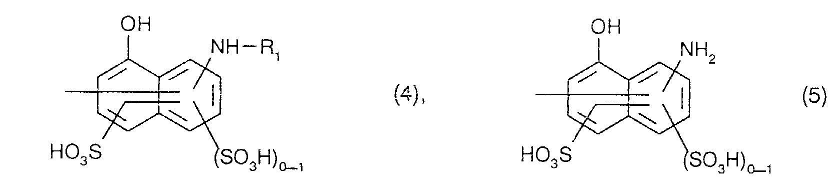 oder 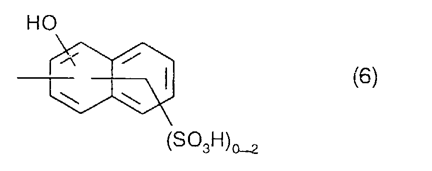 bedeuten, worin
R₁ gegebenenfalls substituiertes Phenyl oder Naphthyl oder ein Rest der Formel -CO-R ist, wobei R gegebenenfalls substituiertes C₁-C₆-Alkyl, C₁-C₆-Alkoxy, C₅-C₇-Cycloalkyl, Phenyl, Phenoxy oder Naphthyl bedeutet.

3. Farbstoffmischungen gemäss Anspruch 2, dadurch gekennzeichnet, dass R gegebenenfalls durch Hydroxy, C₁-C₄-Alkoxy, Sulfo, Sulfato oder Halogen substituiertes C₁-C₆-Alkyl oder C₁-C₆-Alkoxy; gegebenenfalls durch C₁-C₄-Alkyl oder Halogen substituiertes C₅-C₇-Cycloalkyl oder gegebenfalls durch C₁-C₄-Alkyl, C₁-C₄-Alkoxy, Sulfo oder Halogen substituiertes Phenyl, Phenoxy oder Naphthyl ist.

4. Farbstoffmischungen gemäss einem der Ansprüche 2 und 3, dadurch gekennzeichnet, dass
R gegebenenfalls durch Hydroxy, C₁-C₄-Alkoxy oder Halogen substituiertes C₁-C₆-Alkyl oder C₁-C₆-Alkoxy oder gegebenfalls durch C₁-C₄-Alkyl, C₁-C₄-Alkoxy, Sulfo oder Halogen substituiertes Phenyl oder Phenoxy ist.

5. Farbstoffmischungen gemäss einem der Ansprüche 2 bis 4, dadurch gekennzeichnet, dass
R C₁-C₄-Alkyl, insbesondere Methyl oder Aethyl, C₁-C₄-Alkoxy, insbesondere Methoxy oder Aethoxy, oder Phenyl ist.

6. Farbstoffmischungen gemäss Anspruch 2, dadurch gekennzeichnet, dass
R₁ gegebenenfalls durch C₁-C₄-Alkyl, C₁-C₄-Alkoxy, C₂-C₄-Alkanoylamino, Nitro, Halogen, Carboxy oder Sulfo substituiertes Phenyl oder Naphthyl oder ein Rest der Formel -CO-R ist, wobei R gegebenenfalls durch Hydroxy, C₁-C₄-Alkoxy oder Halogen substituiertes C₁-C₆-Alkyl oder C₁-C₆-Alkoxy oder gegebenfalls durch C₁-C₄-Alkyl, C₁-C₄-Alkoxy, Sulfo oder Haiogen substituiertes Phenyl oder Phenoxy ist.

7. Farbstoffmischungen gemäss einem der Ansprüche 2 und 6, dadurch gekennzeichnet, dass
R₁ gegebenenfalls durch C₁-C₄-Alkyl, C₁-C₄-Alkoxy, Halogen oder Sulfo substituiertes Phenyl, insbesondere Phenyl, oder ein Rest der Formel -CO-R ist, wobei R C₁-C₄-Alkyl, insbesondere Methyl oder Aethyl, C₁-C₄-Alkoxy, insbesondere Methoxy oder Aethoxy, oder Phenyl ist.

8. Farbstoffmischungen gemäss einem der Ansprüche 1 bis 7, dadurch gekennzeichnet, dass
A₁ und A₂ unabhängig voneinander je einen Rest der Formeln (4a), (5a), (6a) oder (6b) 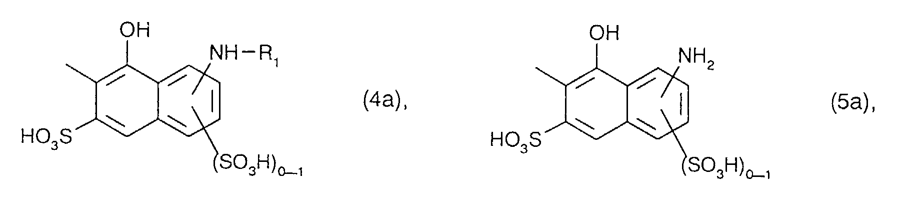 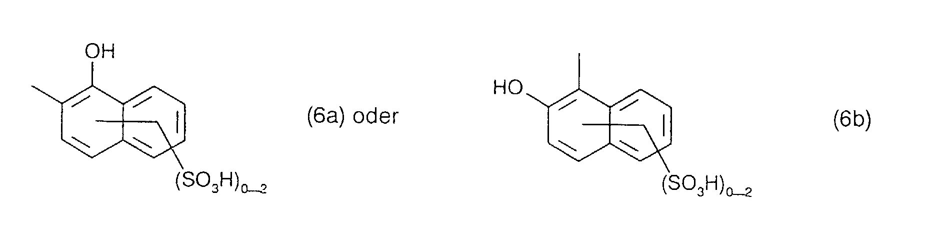 bedeuten, worin
R₁ gegebenenfalls substituiertes Phenyl oder Naphthyl oder ein Rest der Formel -CO-R ist, wobei R gegebenenfalls substituiertes C₁-C₆-Alkyl, C₁-C₆-Alkoxy, C₅-C₇-Cycloalkyl, Phenyl, Phenoxy oder Naphthyl bedeutet.

9. Farbstoffmischungen gemäss einem der Ansprüche 1 bis 8, dadurch gekennzeichnet, dass sie
mindestens einen Farbstoff der Formel (1a) 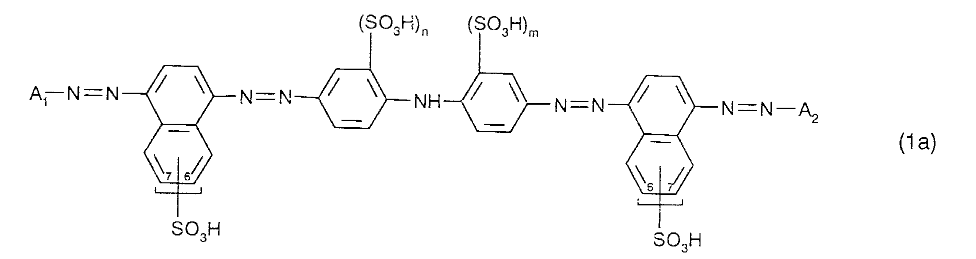 zusammen mit mindestens einem Farbstoff der Formeln (2a) oder (3a) 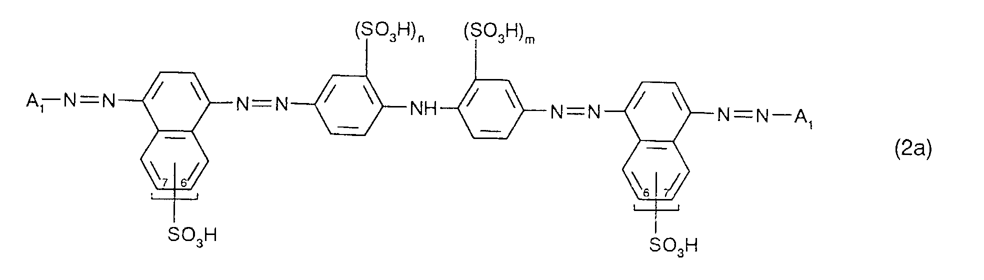 oder 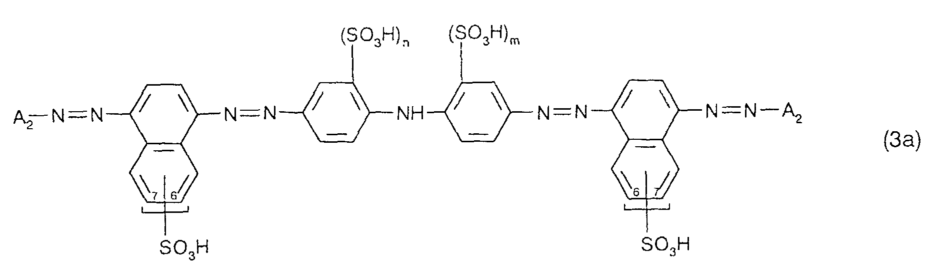 enthalten, worin
die Sulfogruppen der Naphthalinsulfonsäurekomponenten unabhängig voneinander je in 6-oder 7-Position gebunden sind,
A₁ und A₂ unabhängig voneinander je einen Rest der Formeln (4a), (5a), (6a) oder (6b) bedeuten,
R₁ gegebenenfalls durch C₁-C₄-Alkyl, C₁-C₄-Alkoxy, Halogen oder Sulfo substituiertes Phenyl oder ein Rest der Formel -CO-R ist, wobei
R Methyl, Aethyl, Methoxy, Aethoxy oder Phenyl bedeutet und
die Summe von n und m die Zahl 0 oder 1 ist.

10. Farbstoffmischungen gemäss Anspruch 9, dadurch gekennzeichnet, dass
A₁ und A₂ unabhängig voneinander je einen Rest der Formeln (4a), (5a) oder (6b) bedeuten,
R₁ Phenyl oder ein Rest der Formel -CO-R ist, wobei
R Methyl, Aethyl oder Phenyl bedeutet.

11. Farbstoffmischungen gemäss einem der Ansprüche 9 und 10, dadurch gekennzeichnet, dass sie
mindestens einen Farbstoff der Formel (1a) zusammen mit mindestens einem Farbstoff der Formel (2a) und mindestens einem Farbstoff der Formel (3a) enthalten.

12. Verfahren zur Herstellung von Farbstoffmischungen gemäss Anspruch 1, dadurch gekennzeichnet, dass man eine Verbindung der Formel (7) 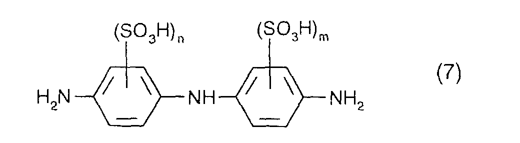 diazotiert, auf eine Verbindung der Formel (8) kuppelt 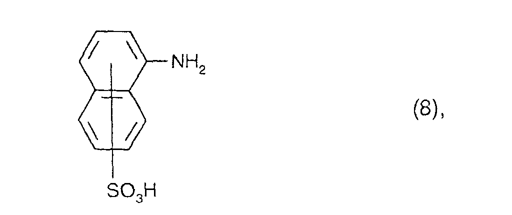 die resultierende Verbindung der Formel (9) 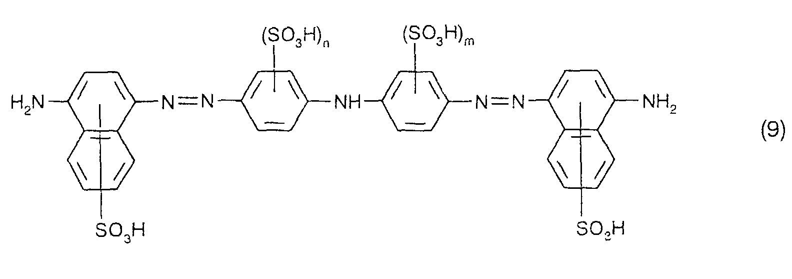 diazotiert und auf die Verbindungen der Formel (10) und (11)
A₁-H (10)
und
A₂-H (11)
kuppelt, wobei A₁, A₂, n und m jeweils die im Anspruch 1 angegebenen Bedeutungen haben.

13. Azofarbstoffe der Formel (12) 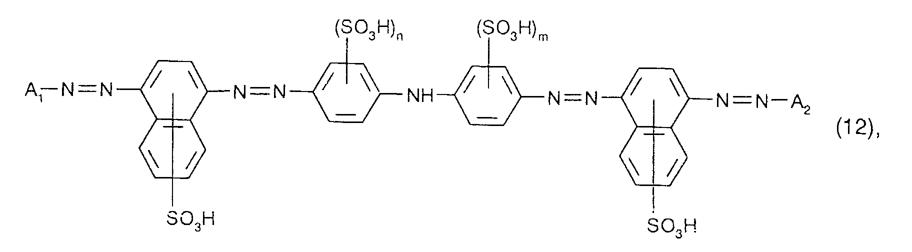 dadurch gekennzeichnet, dass
A₁ und A₂ unabhängig voneinander je einen Rest der Formeln (4), (5) oder (6) 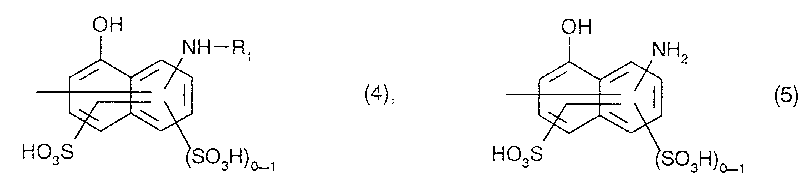 oder 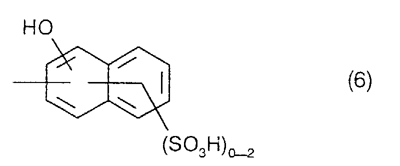 bedeuten, worin
n und m die Zahl 0 oder 1 ist und
R₁ die in Anspruch 2 angegebenen Bedeutungen hat, mit der Massgabe, dass, falls A₁ und A₂ identische Reste der Formel (5) sind und die Summe von n und m die Zahl 1 ist, die Reste A₁ und A₂ nicht gleichzeitig 2- oder 3- oder 4-Amino-8-hydroxy-6-sulfonaphth-7-yl oder 1-Amino-8-hydroxy-3,6-disulfonaphth-7-yl bedeuten.

14. Azofarbstoffe gemäss Anspruch 13, der Formel (12a) 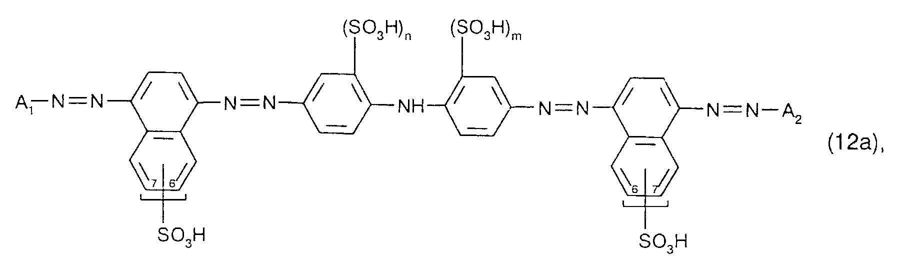 worin
die Sulfogruppen der Naphthalinsulfonsäurekomponenten unabhängig voneinander je in 6-oder 7-Position gebunden sind,
A₁ und A₂ unabhängig voneinander je einen Rest der Formeln (4a), (5a), (6a) oder (6b) 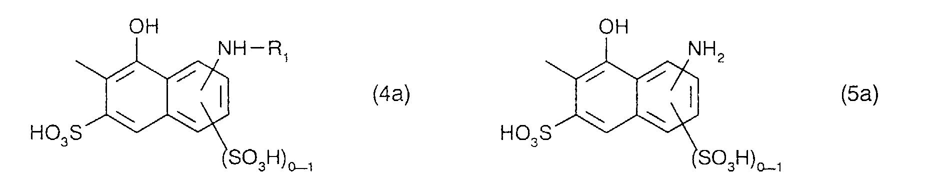 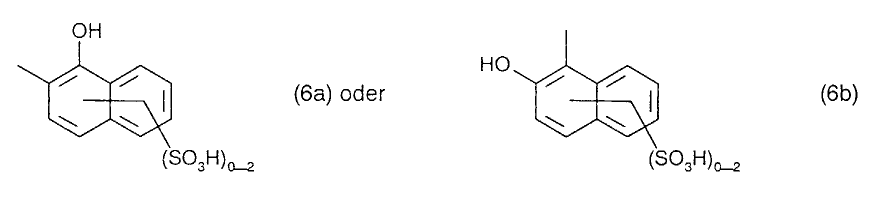 bedeuten, worin
R₁ gegebenenfalls durch C₁-C₄-Alkyl, C₁-C₄-Alkoxy, Halogen oder Sulfo substituiertes Phenyl, insbesondere Phenyl oder ein Rest der Formel -CO-R ist, wobei
R Methyl, Aethyl, Methoxy, Aethoxy oder Phenyl bedeutet und
die Summe von n und m die Zahl 0 oder 1 ist.

15. Verwendung der Farbstoffmischungen gemäss einem der Ansprüche 1 bis 11 bzw. der gemäss Anspruch 12 erhaltenen Farbstoffmischungen zum Färben oder Bedrucken von stickstoffhaltigen oder hydroxygruppenhaltigen Fasermaterialien.

16. Verwendung gemäss Anspruch 15, dadurch gekennzeichnet, dass man Fasergemische aus Synthesefasern und cellulosischen Fasermaterialien, insbesondere Polyester/Baumwoll-Mischgewebe, in Gegenwart eines Dispersionsfarbstoffes für die Polyesterfasern unter den Färbebedingungen für Polyesterfasern färbt.

17. Verfahren zum Färben von Polyester/Baumwoll-Mischgeweben mit Dispersions- und Direktfarbstoffen, dadurch gekennzeichnet, dass man in einem einstufigen, einbadigen Verfahren neben den Dispersionsfarbstoffen Farbstoffmischungen gemäss Anspruch 1 verwendet und aus wässriger Flotte bei Temperaturen im Bereich von 100 bis 150°C, vorzugsweise 120 bis 130°C, und einem pH-Wert zwischen 4 und 7,5 färbt.
